# EUROPÄISCHE PATENTSCHRIFT

(11) **EP 1 851 276 B1**
(45) Veröffentlichungstag und Bekanntmachung des Hinweises auf die Patenterteilung: **25.01.2017**
(21) Anmeldenummer: 06708154.7
(22) Anmeldetag: 09.02.2006
(51) Int. Cl.: C09D 5/08, C23F 11/167, C07F 9/30

(54) **VERFAHREN ZUM AUFBRINGEN CHROMFREIER KORROSIONSSCHUTZSCHICHTEN ENTHALTEND DITHIOPHOSPHINSÄUREN UND/ODER DEREN SALZEN**
A METHOD FOR APPLYING ANTI-CORROSION COATINGS THAT ARE DEVOID OF CHROME COMPRISING DITHIOPHOSPHINIC ACID AND/OR ITS SALTS
UN PROCÉDÉ POUR APPLIQUER DES COUCHES DE PROTECTION CONTRE LA CORROSION DEPOURVUES DE CHROME COMPRENANT D'ACIDES DITHIOPHOSPHINIQUES ET/OU DE LEURS SELS

(30) Priorität: 10.02.2005 DE 102005006233; 26.09.2005 DE 102005046075
(43) Veröffentlichungstag der Anmeldung: 07.11.2007
(73) Patentinhaber: BASF Coatings GmbH, 48165 Münster (DE)
(72) Erfinder: FERNANDEZ GONZALEZ, Monica, 67227 Frankenthal (DE); HICKL, Markus, 48145 Münster (DE); MOCK-KNOBLAUCH, Cordula, New Territories, Hong Kong (CN); ESSIG, Manfred, 67697 Otterberg (DE); SCHREPP, Wolfgang, 69118 Heidelberg (DE); BIEHLER, Manfred, 76831 Ilbesheim (DE)
(86) Internationale Anmeldenummer: PCT/EP2006/050810
(87) Internationale Veröffentlichungsnummer: WO 2006/084879

(56) Entgegenhaltungen:
- DE-A1- 10 149 148
- US-A- 2 881 200
- US-A- 3 454 517
- US-A- 3 580 894
- US-A- 5 322 870
- US-A1- 2004 104 377
- CHROMY L.: "Der Einfluss von Korrosionsinhibitoren auf die Schutzeigenschaften von Beschichtungen" DEUTSCHE FARBEN-ZEITSCHRIFT, Bd. 32, Nr. 11, 1. Dezember 1978 (1978-12-01), Seiten 434-437, XP002377644 in der Anmeldung erwähnt
- L. HORNER: "Vergleich der Schutzwerte einiger phosphor-, schwefel- und arsen-organischer Verbindungen gegenuber Eisenproben unterschiedlicher spezifischer Oberflache" MATERIALS AND CORROSION / WERKSTOFFE UND KORROSION, Bd. 22, Nr. 10, 1. November 1971 (1971-11-01), Seiten 864-867, XP002377517 Weinheim in der Anmeldung erwähnt

## Beschreibung

Die vorliegende Erfindung betrifft ein Verfahren zum Aufbringen chromfreier Korrosionsschichten gemäß der unabhängigen Ansprüche 1 und 9. Dithiophosphinsäuren der allgemeinen Formel HS₂P(R¹)(R²) und/oder deren Salzen werden zur Herstellung chromfreier, polymerhaltiger Korrosionsschutzschichten auf metallischen Oberflächen verwendet, wobei es sich bei R¹ bzw. R² unabhängig voneinander um organische Reste mit 1 bis 30 C-Atomen handelt.

Zur Herstellung von flächigen metallischen Werkstücken wie beispielsweise Automobilteilen, Karosserieteilen, Geräteverkleidungen, Fassadenverkleidungen, Deckenverkleidungen oder Fensterprofilen werden geeignete Metallbleche mittels geeigneter Techniken wie Stanzen, Bohren, Falzen, Profilieren und/oder Tiefziehen ausgeformt. Größere Bauteile, wie beispielsweise Automobilkarosserien werden gegebenenfalls durch Verschweißen mehrerer Einzelteile zusammengefügt. Das Rohmaterial hierzu sind üblicherweise lange Metallbänder, die durch Walzen des Metalls hergestellt und zum Lagern und Transportieren zu Rollen (sogenannten "Coils") aufgewickelt werden.

Während die Korrosionsschutzbehandlung in der Vergangenheit im Wesentlichen am fertigen metallischen Werkstück, beispielsweise einer zusammengeschweißten Automobilkarosserie vorgenommen wurde, wird heutzutage die Korrosionsschutzbehandlung in zunehmendem Maße durch Beschichtung des Bandmetalles selbst vorgenommen.

Diese Technik wird auch häufig als "Coil-Coating" bezeichnet. Hierbei werden die Bandmetalle kontinuierlich mit -in der Regel flüssigen- Beschichtungsstoffen beschichtet. Dabei werden 0,2 bis 2 mm dicke und bis zu 2 m breite Metallbänder, beispielsweise aus Stahl oder Aluminium, mit einer Geschwindigkeit von bis zu 200 m/min durch eine Coil-Coating-Anlage transportiert und dabei mit einer oder mehreren Korrosionsschutz und/oder Lackschichten beschichtet.

Ein typischer Coil-Coating-Prozess umfasst üblicherweise die folgenden Verfahrensschritte:
1. Falls erforderlich: Reinigung des Metallbandes von Verschmutzungen, die sich während der Lagerung des Metallbandes angelagert haben sowie von temporären Korrosionsschutzölen mit Hilfe von Reinigungsbädern.
2. Auftragen einer dünnen Vorbehandlungsschicht (< 1µm) im Tauch- oder Spritzverfahren oder im Rollenauftrag. Diese Schicht soll die Korrosionsbeständigkeit steigern und dient der Verbesserung der Haftung nachfolgender Lackschichten an der Metalloberfläche. Hierzu sind Cr(VI)-haltige wie chromatfreie Vorbehandlungsbäder bekannt.
3. Aufbringen einer Grundierung ("Primer") im Rollenauftragsverfahren. Die Trockenschichtdicke liegt üblicherweise bei etwa 5 - 8 µm. Hier werden Lösungsmittel-basierte Lacksysteme eingesetzt.
4. Aufbringen einer oder mehrerer Decklackschichten ("Topcoat") im Rollenauftragsverfahren. Die Trockenschichtdicke liegt hier bei etwa 15 - 25 µm. Hier werden ebenfalls Lösungsmittel-basierte Lacksysteme eingesetzt.

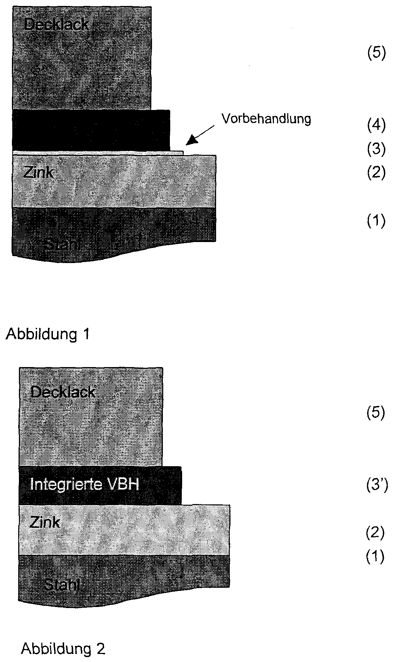

Der Schichtaufbau eines in dieser Weise beschichteten verzinkten Stahlbandes ist in Abbildung 1 dargestellt. Sie zeigt einen Schnitt durch ein Stahlband (1), welches mit einer Zinkschicht (2) versehen wurde, und auf das eine konventionelle Vorbehandlungsschicht (3), eine Grundierung (4) und ein Decklack (5) aufgebracht wurden.

Solchermaßen beschichtete Metallbänder werden beispielsweise zur Herstellung von Gehäusen für die sogenannte weiße Ware (Kühlschränke etc.), als Fassadenplatten für Gebäude oder auch im Automobilbau eingesetzt.

Wie oben dargestellt ist die Beschichtung der Metallbänder mit der Vorbehandlungsschicht (3) und einer Grundierung (4) sehr aufwändig. Weiterhin steigt im Markt zunehmend die Nachfrage nach Cr(VI)-freien Systemen zum Korrosionsschutz. Es ist daher vorgeschlagen worden, anstelle der separaten Aufbringung einer Vorbehandlungsschicht (3) und des organischen Grundlackes (4) eine einzige integrierte Vorbehandlungsschicht (3') aufzubringen, die die Funktionen beider Schichten übernimmt. Ein solcher Schichtaufbau ist beispielhaft und schematisch in Abbildung 2 gezeigt. Die Herstellung eines beschichteten Metallbandes wird durch einen solchen Einstufenprozess deutlich vereinfacht.

US 5,322,870 offenbart eine Zusammensetzung zur Bildung einer integrierten Vorbehandlungsschicht, welche ein polymeres Beschichtungsmittel, einen Vernetzer sowie zusätzlich Alkyl- oder Arylphosporsäureester bzw. Alkyl- oder Arylphosphonsäureester umfassen. Die Zusammensetzung kann optional auch noch ein Pigment umfassen.

DE-A 199 23 084 offenbart ein chromfreies wässriges Beschichtungsmittel zur einstufigen Beschichtung, welches mindestens Hexafluoroanionen von Ti(IV), Si(IV) und/oder Zr(IV), ein wasserlösliches oder wasserdispergierbares filmbildendes Bindemittel sowie eine Organophosphorsäure enthält. Die Zusammensetzung kann optional auch noch ein Pigment sowie Vernetzungsmittel umfassen.

EP-A 878 519 offenbart bevorzugt chromfreie, wässrige Zusammensetzungen zur Herstellung von Korrosionsschutzbeschichtungen, welche 0,2 bis 50 g/l einer Thiocabonylverbindung, 0,1 bis 5 g/l Phosphate sowie wasserlösliche Bindemittel bzw. Bindemitteldispersionen enthalten. Optional können 10 bis 500 g/l SiO₂ vorhanden sein. Bei den Thiocarbonylverbindungen kann es sich beispielweise um Thioharnstoff, Thioamide, Thioaldehyde oder Thiocarbonsäuren handeln.

DE-A 4,308,214 offenbart ein Verfahren zur Herstellung von Dialkyldithiophosphinaten sowie deren Verwendung zur Erzgewinnung. US 5,872,279 offenbart die Verwendung von Bis(1,1,3,3-Tetramethylbutyl)thiophosphinsäure als Extraktionsmittel für Metalle.

In Horner, L; Hinrichs, Hin Werkstoffe und Korrosion 1971 22, 864-868 wird die Verwendung von Diphenylthiophosphinsäure als Korrosionsinhibitor für Eisendrähte und Eisenpulver in wässriger Salzsäure verschiedener Konzentration offenbart.

Chromy, L.; Marek, K, DEFAZET - Deutsche Farben-Zeitschrift 1978, 32, 434-437 *of*fenbaren die Verwendung von Diphenylthiophosphinsäure im Gemisch mit einem Vinylchlorid-Vinylidenchlorid-Copolymer bzw. mit einem Vinylchlorid-Isobutyletherpolyvinylalkohol-Copolymeren zur Beschichtung von Stahl in Schichtdicken von 30 bis 70 µm. Beim Zusatz von Diphenylthiophosphinsäure zu den Polyvinylalkohol-Polymeren wurde eine Verschlechterung der Wirkung im Vergleich zum Polymer ohne Zusatz gefunden.

Aufgabe der Erfindung war es, ein verbessertes Verfahren zum Aufbringen chromfreier Korrosionsschutzschichten, insbesondere von integrierten Vorbehandlungsschichten, bereit zu stellen

Dementsprechend wurden die Verfahren gemäß der Ansprüche 1 und 9 gefunden.

Dabei werden Dithiophosphinsäuren der allgemeinen Formel HS₂P(R¹)(R²) und/oder deren Salzen zur Herstellung chromfreier, polymerhaltiger Korrosionsschichten auf metallischen Oberflächen verwendet, wobei es sich bei R¹ bzw. R² unabhängig voneinander um organische Reste mit 1 bis 30 C-Atomen handelt.

In einer bevorzugten Ausführungsform der Erfindung werden die chromfreien Korrosionsschutzschichten auf metallische Oberflächen mittels eines Verfahrens aufgebracht, welches mindestens die folgenden Schritte umfasst:
(1) Behandeln der metallischen Oberfläche mit einer vernetzbaren Zubereitung umfassend mindestens
   (A) ein polymeres Bindemittel,
   (B) vernetzbare Komponenten, wobei es sich dabei um vernetzbare Gruppen, die mit dem Bindemittel verbunden sind und/oder um mindestens einen zusätzlich eingesetzten Vernetzer handeln kann,
   (C) ein Pigment und/oder Füllstoff,
   (D) ein Korrosionsschutzmittel, sowie
   (E) optional ein Lösemittel, und
(2) thermisches Vernetzen der aufgebrachten Schicht,
   dadurch gekennzeichnet, dass es sich bei dem Korrosionsschutzmittel (D) um 0,25 bis 10 Gew. % mindestens einer Dithiophosphinsäure der allgemeinen Formel HS2P(R1)(R2) und/oder eines Salzes davon handelt, wobei es sich bei R1 bzw. R2 unabhängig voneinander um organische Reste mit 1 bis 30 C-Atomen handelt, und es sich bei dem Bindemittel (A) um eines ausgewählt aus der Gruppe von (Meth)acrylat(co)polymerisaten, partiell verseifte Polyvinylestern, Polyestern, Alkydharzen, Polylactonen, Polycarbonaten, Polyethern, Epoxidharz-Amin-Addukten, Polyharnstoffen, Polyamiden, Polyimiden oder Polyurethanen handelt.

In einer weiteren Ausführungsform der Erfindung handelt es sich um ein strahlungshärtbares System, wobei das Verfahren mindestens die folgenden Schritte umfasst:
(1) Behandeln der metallischen Oberfläche mit einer durch Strahlung vernetzbaren Zubereitung umfassend mindestens
   (V) mindestens eine vernetzbare Komponente, welche mittels Strahlung vernetzbare Gruppen aufweist,
   (V') optional mindestens einen Reaktivverdünner,
   (C) ein Pigment und/oder Füllstoff,
   (D) ein Korrosionsschutzmittel, sowie
   (E) optional ein Lösemittel, und
(2) Vernetzen der aufgebrachten Schicht mittels Strahlung,
   dadurch gekennzeichnet, dass es sich bei dem Korrosionsschutzmittel (D) um 0,25 bis 10 Gew. % mindestens einer Dithiophosphinsäure der allgemeinen Formel HS₂P(R¹)(R²) und/oder eines Salzes davon handelt, wobei es sich bei R¹ bzw. R² un abhängig voneinander um organische Reste mit 1 bis 30 C-Atomen handelt und es sich bei den strahlungshärtbaren Gruppen um ethylenisch ungesättigte Gruppen handelt.

In einer weiterhin bevorzugten Ausführungsform der Erfindung handelt es sich bei der Korrosionsschutzschicht um eine integrierte Vorbehandlungsschicht.

In einer weiteren Form kann es sich um ein Verfahren zum Aufbringen chromfreier Korrosionsschutzschichten auf metallische Oberflächen handeln mindestens umfassend die Schritte

Behandeln der metallischen Oberfläche mit einer unter atmosphärischen Bedingungen härtbaren Zubereitung umfassend mindestens
(A) ein unter atmosphärischen Bedingungen härtbares Bindemittelsystem,
(C) optional ein Pigment und/oder Füllstoff,
(D) ein Korrosionsschutzmittel, sowie
(E) optional ein Lösemittel, und

(2) Härten der aufgebrachten Schicht unter atmosphärischen Bedingungen.

### Verzeichnis der Abbildungen

Abbildung 1: Schnitt durch ein verzinktes Stahlband bei konventioneller, zweistufiger Vorbehandlung
Abbildung 2: Schnitt durch ein verzinktes Stahlband bei integrierter, einstufiger Vorbehandlung.

### Zu der Erfindung ist im Einzelnen das Folgende auszuführen:

### Eingesetzte Dithiophosphinsäuren

Erfindungsgemäß werden Dithiophosphinsäuren der allgemeinen Formel HS₂P(R¹)(R²) zur Herstellung chromfreier, polymerhaltiger Korrosionsschutzschichten auf metallischen Oberflächen verwendet.

Hierbei handelt es sich bei R¹ bzw. R² unabhängig voneinander um organische Reste mit 1 bis 30 C-Atomen, bevorzugt 1 bis 20 C-Atomen und besonders bevorzugt 1 bis 10 C-Atomen. Die Rest können gegebenenfalls auch noch Heteroatome und/oder funktionelle Gruppen umfassen. Es kann sich hierbei um geradkettige, verzweigte oder cyclische aliphatische Reste handeln, oder um aromatische und/oder araliphatischen bzw. Arylalkyl-Kohlenwasserstoffreste. Beispiele derartiger Reste umfassen Methyl-, Ethyl-, n-Propyl, i-Propyl, n-Butyl, i-Butyl, tert-Butyl, n-Pentyl, n-Hexyl-, n-Heptyl, n-Octyl-, n-Nonyl-, n-Decyl, n-Dodecyl-, 2-Ethylhexyl-, Phenyl oder 4-Methylphenylreste.

Bevorzugt handelt es sich bei R¹ und R² unabhängig voneinander um einen geradkettigen, verzweigten oder cyclischen Alkylrest mit 1 bis 10 C-Atomen, besonders bevorzugt 3 bis 8 C-Atomen. Beispiele bevorzugter Reste R¹ bzw. R² umfassen, n-Propyl, i-Propyl, n-Butyl, i-Butyl, tert-Butyl, n-Pentyl, n-Hexyl-, n-Heptyl, n-Octyl-, 2-Ethylhexyl-, Cyclopentyl- und Cyclohexylgruppen.

Die Herstellung von Dithiophosphinsäuren ist prinzipiell bekannt. Als Beispiel sei auf US 4,308,214 verwiesen.

Die Dithiophosphinsäuren können als freie Säure und/oder in Form von deren Salzen eingesetzt werden. Beispiele geeigneter Salze umfassen Alkalimetallsalze, Ammoniumsalze oder Erdalkalisalze, insbesondere Li, Na, K oder NH₄⁺-Salze. Bei den Gegenionen kann es sich auch organische Kationen handeln, beispielsweise um Ammoniumkationen der allgemeinen Formel NR'₄⁺, wobei die Reste R' unabhängig voneinander für H oder einen organischen Rest, insbesondere einen geradkettigen oder verzweigten Alkylrest mit 1 bis 20, bevorzugt 1 bis 10 C-Atomen steht. Beispiele geeigneter Rest umfassen Methyl-, Ethyl-, n-Propyl oder n-Butylreste.

Die Menge der Dithiophosphinsäuren in der Korrosionsschutzschicht wird vom Fachmann je nach den gewünschten Eigenschaften der Schicht gewählt und beträgt üblicherweise 0,25 bis 10 Gew. % bezüglich der Summe aller Komponenten der Schicht.

### Metallische Substrate

Mittels des erfindungsgemäßen Verfahrens können im Prinzip beliebige metallische Körper vor Korrosion geschützt werden.

Bei einer Ausführungsform der Erfindung kann es sich hierbei um immobile metallischen Konstruktionen wie beispielsweise Gebäude, Brücken, Strommasten, Öltanks, Pipelines, Kraftwerke oder chemischen Anlagen handeln. Bei dieser Ausführungsform werden Korrosionsschutzbeschichtungen üblicherweise an Ort und Stelle aufgestrichen oder aufgespritzt. Die Trocknung und Härtung derartiger Korrosionsschutzbeschichtungen erfolgt unter atmosphärischen Bedingungen also bei Umgebungstemperatur sowie in Gegenwart von Luft und üblicher Luftfeuchtigkeit. Je nach dem erforderlichen Schutzgrad wird der Korrosionsschutz von Oberflächen durch Korrosionsschutzanstriche auch als leichter, mittlerer und schwerer Korrosionsschutz bezeichnet.

In einer weiteren Ausführungsform der Erfindung lassen sich besonders vorteilhaft flächige metallische Körper wie Bleche, Folie, Platten und insbesondere Metallbänder mit einer integrierten Vorbehandlungsschicht versehen. Derartige Schichten werden bevorzugt mittels Coil-Coating erzeugt. Die Trocknung und Härtung wird üblicherweise bei höheren Temperaturen, beispielsweise in geeigneten Öfen vorgenommen, oder sie kann auch photochemisch unter Verwendung geeigneter Strahlungsquellen vorgenommen werden.

Bei der Art des Metalls kann es sich im Prinzip um beliebige Metalle handeln. Insbesondere handelt es sich aber um solche Metalle oder Legierungen, welche üblicherweise als metallische Konstruktionswerkstoffe eingesetzt werden, und die vor Korrosion geschützt werden müssen.

Insbesondere handelt es sich um Oberflächen von Eisen, Stahl, Zn, Zn-Legierungen, Al oder AI-Legierungen. Es kann sich dabei um die Oberflächen von vollständig aus den besagten Metallen bzw. Legierungen bestehenden Körpern handeln. Die Körper können aber auch nur mit diesen Metallen beschichtet sein und selbst aus andersartigen Materialien bestehen, beispielsweise aus anderen Metallen, Legierungen, Polymeren oder Verbundwerkstoffen. Insbesondere kann es sich um die Oberfläche von verzinktem Eisen oder Stahl handeln. In einer bevorzugten Ausführungsform des Verfahrens handelt es sich um die Oberfläche eines Bandmetalls, insbesondere um elektrolytisch verzinkten oder heißverzinkten Stahl. Es kann sich dabei sowohl um einseitig wie um zweiseitig verzinktes Metallband handeln.

Zn- oder AI-Legierungen sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Es kann sich auch um Al/Zn-Legierungen handeln, bei denen AI- und Zn in annähernd gleicher Menge vorhanden sind. Mit derartigen Legierungen beschichteter Stahl ist kommerziell erhältlich. Der Stahl kann die Üblichen, dem Fachmann bekannten Legierungskomponenten enthalten.

Der Begriff "chromfreie Korrosionsschutzschicht" im Sinne dieser Erfindung bedeutet, dass der erfindungsgemäßen Korrosionsschutzschicht keine Chromverbindungen zugesetzt werden, und dass auch keine korrosionshemmende Vorbehandlung der Metalloberfläche mit Chromverbindungen durchgeführt wird. Dies schließt selbstverständlich nicht aus, dass die Korrosionsschutzschicht an sich unbeabsichtigt Spuren von Chrom bzw. Chromverbindungen in der Schicht befinden enthalten kann. Derartige Spuren können beispielsweise gebildet werden, falls sich im Zuge der Beschichtung eines chromhaltigen Stahles Chromspuren aus dem Metall herauslösen.

Die Korrosionsschutzschicht ist auf der Metalloberfläche direkt aufgebracht, d.h. die Metalloberfläche wird nicht vorher mit anderen anorganischen oder organischen Schichten versehen. Dies schließt selbstverständlich aber nicht aus, dass sich auf der Metalloberfläche noch eine dünne Schicht befinden können, die sich beim üblichen Umgang mit dem Metall in Gegenwart von Luft unvermeidlicherweise bilden. Als Beispiel sei eine dünne Oxidhaut genannt.

Bei der Korrosionsschutzschicht kann es sich beispielsweise um eine temporäre Korrosionsschutzschicht handeln. Eine temporäre Korrosionsschutzschicht dient dem vorübergehenden Schutz der Metalloberfläche, beispielsweise während Transport oder Lagerung. Bei der Korrosionsschutzschicht kann es sich weiterhin um eine Passivierungsschicht oder eine integrierte Vorbehandlungsschicht handeln.
Der Begriff "Integrierte Vorbehandlungsschicht" wurde bereits eingangs definiert. Eine integrierte Vorbehandlungsschicht kombiniert die Passivierungsschicht mit der organischen Grundierung in einer einzigen Schicht. Dies ist auch in Abbildung 2 dargestellt.

Auf eine integrierte Vorbehandlungsschicht können weitere Lackschichten, wie beispielsweise kathodische Tauchlacke, unmittelbar aufgebracht werden, ohne dass vorher noch eine zusätzliche organische Grundierung aufgebracht werden muss. Selbstverständlich ist eine zusätzliche organische Grundierung aber in Spezialfällen möglich, obwohl bevorzugt darauf verzichtet wird.

Die Dicke der Korrosionsschutzschicht wird vom Fachmann je nach der gewünschten Anwendung gewählt. Einzelheiten sind nachstehend genannt.

### Bindemittel

Die Korrosionsschutzschichten umfassen weiterhin mindestens ein polymeres Bindemittel (A). Sie können selbstverständlich auch ein Gemisch verschiedener polymerer Bindemittel (A) umfassen. Das Bindemittel kann von Anfang an in polymerisierter Form vorliegen, d.h. in der eingesetzten Zubereitung zum Aufbringen der Korrosionsschicht schon als Polymer vorliegen, oder aber die Formulierung kann Monomere und/oder Präpolymere umfassen, welche erst nach dem Aufbringen auf die Metalloberfläche zu einem Bindemittel vernetzt wird. Letzteres ist vor allem bei strahlenhärtbaren Systemen der Fall.

Bei dem polymeren Bindemittel (A) kann es sich beispielsweise um Poly(meth)acrylsäure handeln, oder bevorzugt um Copolymere aus (Meth)acrylsäure und anderen Monomeren, welche eine ethylenisch ungesättigte Gruppe sowie saure Gruppen umfassen. Geeignete Comonomere sind beispielsweise Vinylessigsäure, Crotonsäure oder Isocrotonsäure, zwei COOH-Gruppen aufweisende ungesättigte Säuren wie Maleinsäure oder Fumarsäure, Phosphonsäuregruppen aufweisende Säuren wie Vinylphosphonsäure, Allyphosphonsäure oder 3-Butenylphosphonsäure, Phosphorsäuregruppen aufweisende Säuren wie Phosphorsäuremonovinylester, Phosphorsäuremonoallylester, Phosphorsäure(mono-3-butenyl)ester oder (Meth)acrylsäure-(phosphonoxyethyl)ester oder Sulfonsäuregruppen aufweisende Säuren wie Styrolsulfonsäure. Bevorzugt enthalten derartige Copolymere mindestens 50 Gew. % (Meth)acrylsäure, 5 bis 50 Gew. % anderer, sauerer Monomere, sowie bis zu 30 Gew. % davon verschiedener Monomere. Chlorhaltige Monomere, wie beispielsweise Vinylchlorid oder Vinylidenchlorid werden bevorzugt nicht verwendet.

Zum Aufbringen der Schicht wird üblicherweise aus dem polymeren Bindemittel, der Dithiophosphinsäure sowie optional weiteren Komponenten eine geeignete Zubereitung hergestellt und die metallische Oberfläche damit behandelt. Die Zubereitung umfasst bevorzugt ein geeignetes Lösemittel enthalten; sie kann aber auch als Pulverlackformulierung aufgebracht werden. Dem Fachmann ist bekannt, wie man dünne Korrosionsschutzschichten aufbringen kann.

Bei den Bindemitteln kann es sich um thermisch und/oder photochemisch vernetzbare Bindemittelsysteme handeln. Derartige Systeme kommen vor allem beim Coil-Coating zum Tragen. Weiterhin kann es sich auch um unter atmosphärischen Bedingungen härtbare Systeme handeln, welche vor allem bei Korrosionschutzanstrichen Verwendung finden.

### Vernetzbare Zubereitung

In einer bevorzugten Ausführungsform der Erfindung können die Dithiophosphinsäuren zum Aufbringen chromfreier integrierter Vorbehandlungsschichten, insbesondere mittels Coil-Coating, verwendet werden. Hierzu wird eine -bevorzugt thermisch und/oder fotochemisch- vernetzbare Zubereitung eingesetzt. Die Zubereitung umfasst hierzu vernetzbare Komponenten.

In einer Ausführungsform der Erfindung handelt es sich um eine Zubereitung, welche mindestens ein Bindemittel (A) sowie vernetzbare Komponenten (B) umfasst. Bei den vernetzbaren Komponenten kann es sich um mindestens einen Vernetzer handeln, welcher zusätzlich zu einem Bindemittel eingesetzt wird oder es kann sich hierbei um Gruppen vernetzbare Gruppen handeln, welche mit dem Bindemittel verbunden sind. Selbstverständlich kann auch das Bindemittel vernetzbare Gruppen aufweisen und zusätzlich ein Vernetzer eingesetzt werden.

Die Art der Vernetzung ist nicht beschränkt. Beispielsweise kann die Vernetzung thermisch oder fotochemisch vorgenommen werden. Selbstverständlich sind auch Kombinationen möglich, vorausgesetzt, es treten keine unerwünschten Effekte auf. Die Art der vernetzenden Gruppen kann vom Fachmann je der gewünschten Vernetzungstechnologie und nach dem gewünschten Ergebnis gewählt werden.

Bei der Anordnung der vernetzenden Gruppen sind verschiedene Kombinationsmöglichkeiten denkbar. Beispielsweise können Bindemittel und Vernetzer getrennt voneinander eingesetzt werden. Das Bindemittel umfasst dann reaktive funktionelle Gruppen, die mit komplementären, reaktiven funktionellen Gruppen in den Vernetzern reagieren können. Alternativ kann es sich auch um selbstvernetzende Bindemittel handeln, die reaktive funktionelle Gruppen umfassen, die mit Gruppen ihrer Art ("mit sich selbst") oder mit komplementären, reaktiven funktionellen Gruppen am selben Polymer Vernetzungsreaktionen eingehen können. Möglich ist auch, dass ausschließlich die Vernetzer miteinander reagieren.

### Bindemittel (A) und vernetzende Komponenten (B)

Bei den Bindemitteln (A) kann es sich neben den eingangs erwähnten Bindemitteln weiterhin um die auf dem Gebiet der Coil-Coating-Lacke übliche Bindemittel handeln. Beispiele geeigneter Bindemittel umfassen (Meth)acrylat(co)polymerisate, partiell verseifte Polyvinylester, Polyester, Alkydharze, Polylactone, Polycarbonate, Polyether, Epoxidharz-Amin-Addukte, Polyharnstoffe, Polyamide, Polyimide oder Polyurethane. Selbstverständlich können auch Mischungen verschiedener Polymerer eingesetzt werden, vorausgesetzt es treten durch die Mischung keine unerwünschten Effekte auf. Chlorhaltige Polymere werden bevorzugt nicht verwendet.

Bevorzugt werden Polyester oder Epoxidharz-Amin-Addukte eingesetzt. Die Polyester eignen sich insbesondere für schweißbare Lacke und die Epoxidharz-Amin-Addukte sind für Lacke bevorzugt, die nicht geschweißt werden sollen.

Bei geeigneten Polyestern handelt es sich insbesondere um Kondensate niedermolekularer Dicarbonsäuren und Dialkohole. Beispiele geeigneter Dicarbonsäuren umfassen aliphatische Dicarbonsäuren wie Adipinsäure, Azelainsäure, Sebacinsäure, Dodecandisäure, aliphatisch cycloaliphatische wie Dimerfettsäuren, d.h. Umsetzungsprodukten ungesättigter Fettsäuren miteinander, cycloaliphatische Dicarbonsäuren wie 1,4-oder 1,3 Cyclohexandicarbonsäure, Tricyclodecandicarbonsäure und aromatische Dicarbonsäuren wie Isophthalsäure, Terephthalsäure oder Phthalsäure. Es können selbstverständlich auch Derivate von Dicarbonsäuren eingesetzt werden. Besonders geeignet sind Anhydride wie beispielsweise Phthalsäureanhydrid, Hexahydrophthalsäureanhydrid oder Tetrahydrophthalsäureanhydrid.

Beispiele geeigneter Dialkohole umfassen aliphatische Alkohole wie zum Beispiel Ethylenglykol, Diethylenglykol, Triethylenglykol, Propylenglykol, 1,3-Butandiol, 1,3-Propandiol, 1,4-Butandiol, Neopentylglykol, 1-Methyl Propandiol-1,3, 2-Butyl-2-ethylpropandiol, Pentandiole, Hexandiole, Octandiole, Dodecandiol, Hydroxypivalinsäureneopentylglykolester, cycloaliphatische Alkohole wie 1,4- oder 1,3 -Cyclohexandimethanol, TCD-Alkohol und Bis(4-hydroxycyclohexyl)methan bzw. propan und Dimerdiole (hydrierte Dimerfettsäuren). Es können selbstverständlich in bekannter Art und Weise auch Derivate von Alkoholen eingesetzt werden, wie beipielsweise Ester, insbesondere die entsprechenden Methyl- oder Ethylester.

Neben lineraren Bindemitteln können auch verzweigte Bindemittel eingesetzt werden. Geeignete Monomere zur Erzeugung von Verzweigungen umfassen Tricarbonsäuren oder deren Anhydride wie Trimelithsäureanhydrid oder Trimesinsäure und Trialkohole wie Trimethalyolalkane beispielsweise Trimethylolethan oder Trimetylolpropan.

Bevorzugt können die Polyester durch Reaktion mit Polyisocyanaten ganz oder teilweise zu Isocyanat-terminierten Polyestern umgesetzt werden.

Die OH-Zahl der eingesetzten Polyester beträgt üblicherweise ca. 10 bis ca. 200 mg KOH/g, bevorzugt 15 bis 120 mg KOH/g, besonders bevorzugt 20 bis 80 mg KOH/g und beispielsweise ca. 50 mg KOH/g. Die Molekulargewichte betragen üblicherweise 400 bis 10000 g/mol, bevorzugt 500 bis 5000 g/mol und besonders bevorzugt 1000 bis 4000 g/mol.

Epoxyfunktionelle Polymere können durch die Reaktion von epoxyfunktionellen Monomeren wie Bisphenol-A-Diglycidylether, Bisphenol-F-Diglycidylether oder Hexandioldiglycidylether mit Phenolen wie Bisphenol A, Bisphenol F und/oder Alkoholen wie ethoxyliertem oder propoxiliertem Bisphenol A hergestellt werden. Epoxifunktionelle Polymere sind kommerziell erhältlich, beispielsweise unter dem Namen Epon^{®} oder Epikote^{®}.

Epoxidharz-Amin-Addukten können durch Reaktion der besagten epoxyfunktionellen Komponenten mit Phenolen bzw. aliphatischen oder cycloaliphatischen Dicarbonsäuren, sauren Polyestern oder Alkoholen, Thiolen sowie Aminen, insbesondere sekundären Aminen wie beispielsweise Diethanolamin oder N-Methylbutanolamin erhalten werden.

Weiterhin können auch Emulsionspolymerisate eingesetzt werden. Diese eignen sich insbesondere für wasserbasierende Formulierungen. Beispiele geeigneter Emulsionspolymerisate oder -copolymerisate umfassen Acrylatdispersionen, erhältlich in üblicher Art und Weise aus Acrylsäure und/oder Acrylsäurederivaten, beispielsweise Acrylsäureestern und/oder Styrol. Es eignen sich auch Dispersionen aus Polyurethanen, hergestellt aus aromatischen und/oder aliphatischen Diisocyanaten und Polyestern oder aliphatischen Weichsegmenten.

Die Menge der eingesetzten Bindemittel wird vom Fachmann je nach den gewünschten Eigenschaften der Schicht festgelegt. Bevorzugt umfasst die eingesetzte Zubereitung 20 bis 70 Gew. % des Bindemittels. Alle Gew. %-Angaben beziehen sich im Folgenden auf die Summe aller Komponenten der Zubereitung mit Ausnahme des Lösemittels oder des Lösemittelgemisches. Besonders bevorzugt beträgt die Menge 30 bis 60 Gew. % und ganz besonders bevorzugt 40 bis 50 Gew. %.

Die vernetzenden Komponenten (B) können thermisch vernetzende Gruppen oder fotochemisch vernetzende Gruppen aufweisen.

Geeignete thermische Vernetzer sind beispielsweise Vernetzer auf Basis von Epoxiden, bei denen zwei oder mehrere Epoxygruppen mittels einer verknüpfenden Gruppe miteinander verbunden sind. Beispiele umfassen niedermolekulare Verbindungen mit zwei Epoxygruppen wie Hexandioldiglycidylether, Phthalsäurediglycidylether oder cycloaliphathische Verbindungen wie 3,4-Epoxicyclohexancarbonsäure-3',4'-epoxycyclo-hexylmethylester. Weitere Beispiele geeigneter Vernetzer umfassen Vernetzer auf Basis von Melamin.

Besonders bevorzugt werden blockierte Polyisocyanate als thermische Vernetzer eingesetzt. Bei der Blockierung wird die Isocyanatgruppe reversibel mit einem Blockierungsmittel umgesetzt. Das Blockierungsmittel wird beim Erhitzen auf höhere Temperaturen wieder abgespalten. Beispiele geeigneter Blockierungsmittel sind in DE-A 199 14 896, Spalte 12, Zeile 13 bis Spalte 13, Zeile 2 offenbart. Besonders bevorzugt werden mit ε-Caprolactam blockierte Polyisocyanate eingesetzt.

Geeignete Vernetzer zur photochemischen Vernetzung sind insbesondere Verbindungen mit mehreren ethylenisch ungesättigten Gruppen, insbesondere di- oder polyfunktionelle Acrylate wie beispielsweise Butandioldiacrylat, Hexandioldiacrylat oder Trimethylolpropantriacrylat.

Falls ein Vernetzer separat eingesetzt wird, werden üblicherweise 0,5 bis 10 Gew. %, bevorzugt 1 bis 8 Gew. % und besonders bevorzugt 2 bis 6 Gew. % eingesetzt. Selbstverständlich können auch Gemische verschiedener Vernetzer eingesetzt werden, vorausgesetzt, die Eigenschaften der Schicht werden dadurch nicht negativ beeinflusst.

### Strahlenhärtbare Systeme

In einer weiteren Ausführungsform der Erfindung handelt es sich um ein strahlenhärtbares System. Hierzu werden Zubereitungen eingesetzt, welche neben den erfindungsgemäß verwendeten Korrosionsinhibitoren eine oder bevorzugt mehrere niedermolekulare, oligomere und/oder polymere strahlenhärtbare Komponenten enthalten, welche bei der Strahlungshärtung eine polymere Bindemittelmatrix bilden. Die Härtung wird hierbei durch energiereiche Strahlung, beispielsweise UV-, VIS-, NIR- oder Elektronenstrahlung ausgelöst. Selbstverständlich kann es sich auch um kombinierte Techniken handeln, bei denen man gleichzeitig oder nacheinander bestrahlt und erwärmt.

### Vernetzbare Komponenten (V)

Die eingesetzten Formulierungen umfassen mindestens eine vernetzbare Komponente (V), welche mindestens zwei vernetzbare Gruppen aufweisen. In der Regel handelt es sich hierbei um oligomere- oder polymere Verbindungen. Daneben können noch Reaktivverdünner (V') anwesend sein. Reaktivverdünner können eine oder auch mehrere vernetzbare Gruppen aufweisen. Es handelt sich in der Regel um Monomere. Reaktivverdünner weisen eine niedrigere Viskosität als die oligo- oder polymeren Verenetzer, und nehmen daher in einem strahlenhärtbaren Systeme die Rolle eines Verdünners ein.

Erfindungsgemäß handelt es sich bei den strahlungshärtbaren Gruppen um Gruppen, welche ethylenisch ungesättigte Gruppen aufweisen. Beispiels-weise kann es sich um (Meth)acrylatgruppen, Fumaratgruppen, Maleinatgruppen oder Crotonatgruppen handeln. Derartige Gruppen lassen sich beispielsweise durch Umsetzung α,β-ethylenisch ungesättigter Mono- und/oder Dicarbonsäuren oder deren Anhydriden mit Reaktionspartnern erhalten, welche über Gruppen verfügen, die mit den Carbonsäuregruppen reagieren können. Beispielsweise können die Reaktionspartner OH-Gruppen oder NH₂-Gruppen aufweisen, die mit den Carbonsäuren bzw. deren Derivaten unter Bildung von Carbonsäureestern bzw. Carbonsäureamiden reagieren. Als Carbonsäuren können beispielsweise (Meth)acrylsäure, Maleinsäure, Maleinsäureanhydrid, Fumarsäure, Crotonsäure oder Itaconsäure eingesetzt werden.

Bevorzugt handelt es sich bei den strahlungshärtbaren Gruppen um (Meth)acrylatgruppen, besonders bevorzugt um Acrylatgruppen.

### Multifunktionelle (Meth)acrylate

Als vernetzende Komponenten können beispielsweise multifunktionelle (Meth)acrylate eingesetzt werden, welche mindestens 2, bevorzugt 3 bis 10 und besonders bevorzugt 3 bis 6 (Meth)acrylatgruppen aufweisen.

Hierbei kann es sich beispielsweise um Ester der (Meth)acrylsäure mit mindestens zweiwertigen Polyalkoholen, wie beispielsweise Polyolen, Polyether- oder Polyesterolen oder Polyacrylatpolyolen mit einer mittleren OH-Funktionalität von mindestens 2, bevorzugt 3 bis 10 handeln.

Bei den Alkoholkomponenten kann es sich beispielsweise um alkoxylierte Produkte handeln, die aus den entsprechenden Di- oder Polyolen durch Alkoxylierung in prinzipiell bekannter Art und Weise erhalten werden können. Bevorzugt handelt es sich dabei um (Meth)Acrylate von ein- bis dreißigfach und besonders bevorzugt drei- bis zwanzigfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bei den multifunktionelle (Meth)Acrylate kann es sich auch um Ester und Amide von Aminoalkoholen mit den zuvor genannten α,β-ethylenisch ungesättigten Mono- und/oder Dicarbonsäuren oder Hydroxyalkylvinylethern wie beispielsweise Hydroxybutylvinylether handeln.

Die beschriebenen, einfachen multifunktionelle (Meth)acrylate aus (Meth)acrylatgruppen sowie Alkoholen bzw. alkoxylierten Alkoholen können als alleinige vernetzende Komponenten eingesetzt werden. Ihre Menge beträgt im Allgemeinen 0 bis 80 Gew. % bezüglich der Summe aller Komponenten der Formulierung. Sie können aber auch bevorzugt im Gemisch mit anderen vernetzenden Komponenten eingesetzt werden.

Bei anderen vernetzenden Komponenten zur Ausführung der vorliegenden Erfindung kann es sich insbesondere um multifunktionelle (Meth)Acrylate ausgewählt aus der Gruppe von Urethan(meth)acrylaten, Epoxy(meth)acrylaten, Polyether(meth)acrylaten, Polyester(meth)acrylaten oder Polycarbonat(meth)acrylaten handeln. Selbstverständlich können auch Gemische davon eingesetzt werden. Bevorzugt werden Urethan-(meth)acrylate eingesetzt.

### Urethan(meth)acrylate

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen.

Derartige Urethan(meth)acrylate enthalten als Aufbaukomponenten im Wesentlichen:
(U1) mindestens ein organisches aliphatisches, aromatisches oder cycloaliphatisches Di- oder Polyisocyanat
(U2) mindestens eine Verbindung mit mindestens einer gegenüber Isocyanat reaktiven Gruppe und mindestens einer radikalisch polymerisierbaren ungesättigten Gruppe, und
(U3) optional mindestens eine Verbindung mit mindestens zwei gegenüber Isocyanat reaktiven Gruppen.

Bei der Komponente (U1) handelt es sich um übliche aliphatische, aromatische und/oder cycloaliphatische Di- bzw. Polyisocyanate, bevorzugt solche mit 4 bis 20 C-Atomen. Selbstverständlich können auch Gemische verschiedener Isocyanate eingesetzt werden.

Beispiele derartiger Isocyanate umfassen übliche aliphatische Diisocyanate wie 1,4-Tetramethylendiisocyanat, 1,6-Hexamethylendiisocyanat, 1,8-Octamethylendiisocyanat, 1,10-Decamethylendiisocyanat, 1,12-Dodecamethylendiisocyanat, Tetradecamethylendiisocyanat, cycloaliphatische Diisocyanate wie 1,4-, 1,3- oder 1,2-Diisocyanatocyclohexan, 4,4'- oder 2,4'-Di(isocyanatocyclohexyl)methan, Isophorondiisocyanat, 1,3- oder 1,4-Bis-(isocyanatomethyl)cyclohexan oder aromatische Diisocyanate wie 2,4- oder 2,6-Toluylendiisocyanat, 2,4'- oder 4,4'-Diisocyanatodiphenylmethan, 1,3- oder 1,4-Phenylendiisocyanat, 1,5-Naphthylendiisocyanat, Diphenylen-4,4'-diisocyanat, 4,4'-Diisocyanato-3,3'-dimethyldiphenyldiisocyanat, 3-Methyldiphenylmethan-4,4'-di-isocyanat oder Diphenylether-4,4'-diisocyanat.

Polyisocyanate sind beispielsweise solche von den genannten Diisocyanaten abgeleiteten Isocyanurat-, Biuret-, Uretdion-, Iminooxadiazintrion- und/oder Carbodiimidgruppen enthaltenden Polyisocyanate.

Zur Ausführung der vorliegenden Erfindung werden bevorzugt aliphatische Diisocyanate eingesetzt, bevorzugt aliphatische Isocyanate mit 4 bis 20 C-Atomen.

Als Komponente (U2) können beispielsweise Ester zwei- oder mehrwertiger Alkohole mit α,β-ethylenisch ungesättigen Mono- und/oder Dicarbonsäuren und deren Anhydriden eingesetzt werden, jeweils mit der Maßgabe, dass mindestens eine der im Alkohol vorhandenen OH-Gruppe unverestert bleibt. Beispiele derartiger Carbonsäuren sowie derartiger Alkohole wurden bereits oben genannt.

Vorzugsweise sind die Verbindungen (U2) ausgewählt unter 2-Hydroxyethylacrylat, 2-Hydroxyethylmethacrylat, 2-Hydroxypropylacrylat, 2-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat, Trimethylolpropanmono- oder - diacrylat, Pentaerythritdi- oder -triacrylat und Mischungen davon.

Bei der optionalen Komponente (U3) handelt es sich um wenigstens eine Verbindung mit mindestens zwei gegenüber Isocyanatgruppen reaktiven Gruppen, die ausgewählt sind unter Hydroxyl-, Mercapto-, primären und/oder sekundären Aminogruppen. Derartige Verbindungen dienen zur Kettenverlängerung.

Geeignete Verbindungen (U3) sind sowohl niedermolekulare Alkohole als auch polymere Polyole.

Niedermolekulare Alkohole haben ein Molekulargewicht von höchstens 500 g/mol. Besonders bevorzugt sind Alkohole mit 2 bis 20, bevorzugt 4 bis 20 Kohlenstoffatomen und 2 bis 6 Hydroxylgruppen. Beispiele bevorzugter Diole umfassen 1,2-, 1,3- oder 1,4-Butandiol, 1,4-Pentandiol, 1,5-Pentandiol, 1,6-Hexandiol, 2,5-Hexandiol, Dihydroxymethylcyclohexan oder Bis-hydroxycyclohexyl-propan.

Das zahlenmittlere Molekulargewicht Mₙ bevorzugt eingesetzter polymerer Polyole liegt in einem Bereich von etwa 500 g/mol bis 100.000 g/mol, besonders bevorzugt 500 g/mol bis 10.000 g/mol. Die OH-Zahlen liegen vorzugsweise in einem Bereich von etwa 20 bis 300 mg KOH/g Polymer.

Beispiele bevorzugter polymerer Polyole umfassen Copolymer, die wenigstens einen der zuvor bei (U2) genannten OH-gruppenhaltigen Ester und wenigstens ein weiteres Comonomer, vorzugsweise ausgewählt unter Vinylaromaten, wie z. B. Styrol, Estern der zuvor genannten α,β- ungesättigten Mono- und/oder Dicarbonsäuren mit Monoalkoholen, Vinylestern von bis zu 20 Kohlenstoffatomen enthaltenden Carbonsäuren, Vinylhalogeniden, nicht-aromatischen Kohlenwasserstoffen mit 4 bis 8 Kohlenstoffatomen und 1 oder 2 Doppelbindungen, ungesättigten Nitrilen und Mischungen davon einpolymerisiert enthalten. Dazu zählen weiterhin (teil)hydrolysierte Vinylester-Polymere, bevorzugt Polyvinylacetate.

Dazu zählen weiterhin Polyesterole auf Basis von aliphatischen, cycloaliphatischen und/oder aromatischen Di-, Tri- und/oder Polycarbonsäuren mit Di-, Tri- und/oder Polyolen sowie Polyesterole auf Lacton-Basis.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein.

Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure. Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.
Ferner kommen auch Polycarbonat-Diole, wie sie beispielsweise durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt.

Weiterhin können als (U3) auch Polyetherole, die durch Polymerisation von cyclischen Ethern oder durch Umsetzung von Alkylenoxiden mit einem Startermolekül erhältlich sind, sowie durch Umsetzung von Polyetherolen mit Ammoniak erhältliche α,ω-Di-aminopolyether. Derartige Produkte sind als Jeffamine^{®} kommerziell erhältlich (Fa. Huntsman).

Die zuvor genannten Komponenten (U3) können einzeln oder als Gemische eingesetzt zur Synthese der Urethan(meth)acrylate eingesetzt werden.

Die Urethan(meth)acrylate haben vorzugsweise ein zahlenmittleres Molgewicht Mₙ von 500 g/mol bis 20 000 g/mol, insbesondere von 500 g/mol bis 10 000 g/mol besonders bevorzugt 600 g/mol bis 3000 g/mol und einen Gehalt von 1 bis 5, besonders bevorzugt von 2 bis 4 Mol (Meth)acrylgruppen pro 1000 g Urethan(meth)acrylat.

Besonders bevorzugte Urethan(meth)acrylate weisen eine mittlere (Meth)acrylat-funktionalität von 2 bis 10 auf.

### Polyester(meth)acrylate

Zur Ausführung der vorliegenden Erfindung geeignete Polyester(meth)acrylate lassen sich in prinzipiell bekannter Art und Weise erhalten, indem man die oben als Komponente (U3) erwähnten Polyesterpolyole mit (Meth)acrylsäure umsetzt. Zur Veresterung von (Meth)acrylsäure mit der Hydroxyverbindung sind die dem Fachmann bekannten Verfahren geeignet.

Bei der Veresterung von (Meth)acrylsäure mit der Hydroxyverbindung werden bevorzugt 0,1 bis 1,5, besonders bevorzugt 0,5 bis 1,4 und ganz besonders bevorzugt 0,7 bis 1,3 Äquivalente (Meth)acrylsäure, bezogen auf 1 Hydroxyäquivalent der Hydroxyverbindungen eingesetzt. Die Umsetzung der (Meth)acrylsäure mit den Hydroxyverbindungen kann z.B. in Gegenwart eines üblichen, sauren Veresterungskatalysators vorgenommen und gebildetes Reaktionswasser mittels üblicher Methoden entfernt werden. Zur Vermeidung einer vorzeitigen Polymerisation ist es empfehlenswert, die Umsetzung mit (Meth)acrylsäure in Gegenwart geringer Mengen von üblichen Inhibitoren zur Verhinderung thermischer Polymerisation durchzuführen.

Nach der Veresterung kann das Lösungsmittel, z.B. der Kohlenwasserstoff, aus dem Reaktionsgemisch destillativ, gegebenenfalls unter vermindertem Druck, entfernt werden. Der Veresterungskatalysator kann in geeigneter Weise neutralisiert werden, z.B. durch Zusatz von tertiären Aminen oder Alkalihydroxyden. Auch überschüssige (Meth)-acrylsäure kann teilweise z.B. durch Destillation im Vakuum entfernt werden.

Zur Herstellung von Polyester(meth)acrylaten ist es auch möglich, die (Meth)acrylsäure zusammen mit Ausgangsstoffen des hydroxygruppenhaltigen Polyesters, z.B. Dicarbonsäuren oder deren Anhydride und Diolen bzw. Polyolen vorzulegen und die Ausgangsstoffe zusammen mit der (Meth)acrylsäure in einer Stufe umzusetzen.

### Epoxy(meth)acrylate

Zur Ausführung der vorliegenden Erfindung eingesetzte Epoxid(meth)acrylate sind bevorzugt erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern. Beispiele bevorzugter epoxidierter Olefine umfassen Ethylenoxid, Propylenoxid, *iso-*Butylenoxid, Vinyloxiran, Styroloxid oder Epichlorhydrin, besonders bevorzugt sind Ethylenoxid, Propylenoxid oder Epichlorhydrin und ganz besonders bevorzugt sind Ethylenoxid und Epichlorhydrin.

Beispiele bevorzugter aromatischer Glycidylether umfassen Bisphenol-A-diglycidylether, Bisphenol-F-diglycidylether, Bisphenol-B-diglycidylether, Bisphenol-S-diglycidylether, besonders bevorzugt ist Bisphenol-A-diglycidylether, bevorzugte aliphatische Glycidylether sind beispielsweise 1,4-Butandioldiglycidether, 1,6-Hexandioldiglycidylether, Trimethylolpropantriglycidylether, Pentaerythrittetraglycidylether und (2,2-bis[4-(2,3-epoxypropoxy)cyclohexyl]propan.

Besonders bevorzugt sind die oben erwähnten aromatischen Glycidylether.

Die Epoxid(meth)acrylate und -vinylether haben vorzugsweise ein zahlenmittleres Molgewicht Mₙ von 200 g/mol bis 20000 g/mol, besonders bevorzugt von 200 g/mol bis 10000 g/mol und ganz besonders bevorzugt von 250 g/mol bis 3000 g/mol; der Gehalt an (Meth)acryl- oder Vinylethergruppen beträgt vorzugsweise 1 bis 5, besonders bevorzugt 2 bis 4 pro 1000 g Epoxid(meth)acrylat oder Vinyletherepoxid.

Bevorzugte Epoxid(meth)acrylate weisen eine OH-Zahl von 40 bis 400 mg KOH/g, sowie eine mittlere (Meth)acrylattunktionalität von 2 bis 8 auf.
Besonders bevorzugte Epoxid(meth)acrylate sind solche, wie sie aus Verfahren erhalten werden gemäß EP-A-54 105, DE-A 33 16 593, EP-A 680 985 und EP-A-279 303, bei denen in einer ersten Stufe ein (Meth)acrylsäureester aus (Meth)acrylsäure und Hydroxyverbindungen hergestellt wird und in einer zweiten Stufe überschüssige (Meth)acrylsäure mit Epoxiden umgesetzt wird.

### Carbonat(meth)acrylate

Zur Ausführung der vorliegenden Erfindung geeignete Carbonat(meth)acrylate enthalten im Mittel vorzugsweise 2 bis 5, insbesondere 2 bis 4, besonders bevorzugt 2 bis 3 (Meth)acrylgruppen und ganz besonders bevorzugt 2 (Meth)acrylgruppen.

Das zahlenmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol.

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)-acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

In analoger Weise sind auch Vinylethercarbonate erhältlich, indem man einen Hydroxyalkylvinylether mit Kohlensäureestern sowie gegebenenfalls zweiwertigen Alkoholen umsetzt.

Denkbar sind auch (Meth)acrylate oder Vinylether von Polycarbonatpolyolen, wie das Reaktionsprodukt aus einem der genannten Di- oder Polyole und einem Kohlensäureester sowie einem hydroxylgruppenhaltigen (Meth)acrylat oder Vinylether.

Geeignete Kohlensäureester sind z.B. Ethylen-, 1,2- oder 1,3-Propylencarbonat, Kohlensäuredimethyl-, -diethyl- oder -dibutylester.

Geeignete hydroxygruppenhaltige (Meth)acrylate sind beispielsweise 2-Hydroxyethyl-(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat.

Geeignete hydroxygruppenhaltige Vinylether sind z.B. 2-Hydroxyethylvinylether und 4-Hydroxybutylvinylether.

Besonders bevorzugte Carbonat(meth)acrylate sind solche der Formel: 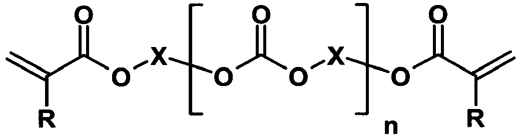 worin R für H oder CH₃, X für eine C₂-C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich bei den Carbonat(meth)acrylaten um aliphatische Carbonat(meth)acrylate.

Dazu zählen weiterhin auch übliche, dem Fachmann bekannte Polycarbonate mit endständigen Hydroxylgruppen, die z. B. durch Umsetzung der zuvor genannten Diole mit Phosgen oder Kohlensäurediestern erhältlich sind.

### Polyether(meth)acrylate

Polyether(meth)acrylate sind beispielsweise Mono-(Meth)acrylate von Poly-THF mit einem Molgewicht zwischen 162 und 2000, Poly-1,3-propandiol mit einem Molgewicht zwischen 134 und 2000 oder Polyethylenglykol mit einem Molgewicht zwischen 238 und 2000.

### Reaktivverdünner (V')

In der fotochemisch vernetzbaren Zubereitungen können neben den genannten vernetzbaren Komponenten optional auch noch übliche Reaktivverdünner (V') eingesetzt werden. Reaktivverdünner weisen in der Regel 1 bis 6 ethylenisch ungesättigte Doppelbindung auf. Sie dienen der Beeinflussung der Vernetzungsdichte und können in strahlenhärtbaren Systemen auch als Lösemittel zur Einstellung der Viskosität der Zubereitung fungieren. Geeignete Reaktivverdünner sind dem Fachmann bekannt. Bevorzugt weisen die Reaktivverdünner nur eine vernetzbare Gruppe auf. Selbstverständlich können Gemische mehrerer verschiedener Reaktivverdünner eingesetzt werden.

Beispiele für geeignete Reaktivverdünner umfassen insbesondere (Meth)acrylsäureester wie (Meth)acrylsäuremethylester, (Meth)acrylsäureethylester, wie z.B. 2-Hydroxyethyl(meth)acrylat, Hydroxyproyl(meth)acrylat, t-Butylcyclohexyl(meth)acrylat, Phenoxyethyl(meth)acrylat, Trimethylolpropanformalmono(meth)acrylat, Ethylenglykoldi(meth)acrylat, Isobornylacrylat, Dipropylenglykoldiacrylat, Tripropylenglykoldiacrylat, Trimethylolpropantriacrylat, Hexandioldiacrylat, Laurylacrylat, Vinylether wie Methylvinylether, Ethylvinylether oder auch Styrol. Weitere Beispiele sind in P.K.T. Oldring (Herausgeber), Chemistry & Technology of UV & EB Formulations for Coatings, Inks & Paints, Vol. II, Chapter III: Reactive Diluents for UV & EB Curable Formulations, Wiley and SITA Technology, London 1997 offenbart.

Die Menge derartiger Reaktivverdünner (V') beträgt im Regelfalle 20 bis 90 Gew. % bezüglich der Menge aller Komponenten der Formulierung.

### Photoinitiatoren

Die eingesetzte, fotochemisch vernetzbare Zubereitung umfasst weiterhin in der Regel einen oder mehrere Fotoinitiatoren, welche die Polymerisation der vernetzbaren Gruppen -im Regelfalle mittels radikalischer Polymerisation- initiieren können. Sofern die Aushärtung mittels Elektronenstrahlen erfolgt, ist deren Zusatz nicht erforderlich.

Die Initiierung der Polymerisation kann mittels energiereicher Strahlung, beispielsweise mittels UV-Strahlung, UV/VIS-Strahlung oder NIR-Strahlung erfolgen. Je nach dem gewünschten Wellenlängenbereich wählt der Fachmann einen geeignete Fotoinitiatoren. Selbstverständlich können auch Gemische verschiedener Fotoinitiatoren eingesetzt werden.

Geeignete Fotoinitiatoren sind dem Fachmann prinzipiell bekannt, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

Beispiele geeigneter Fotoinitiaotoren umfassen Mono- oder Bisacylphosphinoxide, wie sie z.B. in EP-A 7 508, EP-A 57 474, DE-A 196 18 720, EP-A 495 751 oder EP-A 615 980 beschrieben sind. Beispiele bevorzugter Fotoinitiatoren umfassen 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon.

Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenyl-phosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Die Menge der Fotoinitiatoren ist für das erfindungsgemäße Verfahren im Regelfalle höher als bei üblichen UV-Anwendungen und wird vom Fachmann je nach der gewünschten Anwendung bestimmt, beispielsweise nach der Reaktivität der verwendeten vernetzbaren Komponenten, oder ob unter inerten Bedingungen gehärtet wird oder nicht. Sie beträgt im Regelfalle 1 bis 20 Gew. %, bevorzugt 2 bis 18 Gew. % und besonders bevorzugt 3 bis 15 Gew. % bezüglich der Summe aller Komponenten der Formulierung. Sie kann auch nur 1 bis 2 Gew. % betragen, insbesondere bei sehr reaktiven vernetzbaren Komponenten und/oder Härtung unter inerten Bedingungen.

### Atmosphärisch härtbare Systeme

Weiterhin können die Dithiophosphinsäuren zum Aufbringen von unter atmosphärischen Bedingungen härtbaren Korrosionsschutzschichten verwendet werden. Hierzu umfasst die Formulierung ein unter atmosphärischen Bedingungen härtbares Bindemittelsystem.

Bei unter atmosphärischen Bedingungen härtbaren Bindemittelsystemen kann es sich um die auf dem Gebiet der Korrosionsschutzanstriche und Beschichtungen üblichen Bindemittelsysteme handeln. Derartige Bindemittel bzw. Bindemittelsysteme sind dem Fachmann prinzipiell bekannt. Selbstverständlich können auch Mischungen verschiedener Bindemittelsysteme eingesetzt werden, vorausgesetzt es treten durch die Mischung keine unerwünschten Effekte auf.

Der Begriff "Bindemittelsystem" bezeichnet im Folgenden in prinzipiell bekannter Art und Weise diejenigen Anteile der Formulierung, die für die Filmbildung verantwortlich sind.

Der Begriff "unter atmosphärischen Bedingungen härtbar" bedeutet, dass die Bindemittelsysteme die Eigenschaft aufweisen, nach dem Aufbringen auf die Oberfläche unter üblichen Umgebungsbedingungen, d.h. etwa bei Raumtemperatur, in Gegenwart von Luft sowie üblicher Luftfeuchtigkeit ohne die Verwendung zusätzlicher Apparaturen oder Einrichtungen auszuhärten. Typische Härtungstemperaturen betragen je nach der Umgebung mehr als 0 bis 40°C, bevorzugt 5 bis 35°C und beispielsweise 15 bis 25°C. Es ist für den Fachmann klar, dass die Zeit bis zum vollständigen Härten ein und desselben Bindemittelsystems je nach den tatsächlich herrschenden Umgebungsbedingungen unterschiedlich sein kann.

Je nach der Art des eingesetzten Bindemittelsystems kann die Härtung nach verschiedenen Mechanismen verlaufen. Beispielsweise kann es sich um eine rein physikalische Härtung, verursacht durch das Verdunsten des verwendeten Lösemittels handeln. Es kann sich weiterhin um eine oxidative Härtung durch Reaktion des Bindemittelsystems mit dem Sauerstoff der Luft handeln. Schließlich kann es sich auch um eine chemische Vernetzung (Reaktivvernetzung) handeln. Reaktive Bindemittelsysteme umfassen vernetzbare Komponenten. Die vernetzbaren Komponenten können niedermolekular, oligomer oder polymer sein. Es kann sich hierbei bevorzugt um 1 K- oder auch um 2 K-Systeme handeln. Reaktiv vernetzende Systeme umfassen auch feuchtigkeitshärtende Bindemittelsysteme, bei denen die Luftfeuchtigkeit als Härterkomponente fungiert. Selbstverständlich kann ein Bindemittelsystem auch durch eine Kombination verschiedener Härtungsverfahren aushärten. Bei 2-K-Systemen werden die Binder- und die Härterkomponente in prinzipiell bekannter Art und Weise vor dem Verwenden der Formulierung gemischt.

Es können wässrig lösliche oder organisch lösliche Bindemittelsysteme eingesetzt werden. Bevorzugt handelt es sich um Bindemittelsysteme auf wässriger Basis.

Bindemittelsysteme für Korrosionsschutzbeschichtungen, insbesondere Korrosionsschutzsysteme auf wässriger Basis sind dem Fachmann prinzipiell bekannt. Es kann sich beispielsweise um Epoxyharze, Polyacrylate, Styrol-Acrylat-Polymere, Polyester, Alkydharze, Polyurethane der Styrol-Butadien-Polymere handeln.

Die Menge der Bindemittel (A) in der Formulierung beträgt bei atmosphärisch härtbaren Systeme in der Regel 15 bis 70 Gew. %, bezogen auf die Menge aller Komponenten der Formulierung einschließlich des Lösemittels. Sie wird vom Fachmann je nach den gewünschten Eigenschaften der Beschichtung festgelegt. Bevorzugt beträgt die Menge 20 bis 60 Gew. % und besonders bevorzugt 25 bis 50 Gew. %.

Bindemittelsysteme für atmosphärisch härtbare Systeme sind nachfolgend beschrieben.

### Polyacrylate bzw. Styrol-Acrylat-Copolymere (A1)

Bei dem Bindemittelsystem für atmosphärisch härtbare Systeme handelt es sich üblicherweise um eine wässrige oder überwiegend wässrige Dispersion von Polyacrylaten bzw. Styrol-Acrylat-Copolymeren (A1).

Wässrige Dispersionen von Polyacrylaten bzw. Styrol-Acrylat-Copolymeren (A1) zur Herstellung von Korrosionsschutzanstrichen sind dem Fachmann prinzipiell bekannt. Bei den wässrigen Dispersionen der Polyacrylate (A1) kann es sich sowohl um Primärdispersionen wie um Sekundärdispersionen handeln. Geeignete Polyacrylate enthalten als Hauptmonomere mindestens ein Alkyl(meth)acrylat wie beispielsweise Methyl(meth)acrylat, Ethyl(meth)acrylat, Butyl(meth)acrylat oder 2-Ethylhexyl(meth)acrylat. Sie können bevorzugt als weitere Hauptmonomere Vinylaromaten, insbesondere Styrol aufweisen. Die Menge der Hauptmonomeren zusammen beträgt in der Regel mindestens 60 Gew. %, bevorzugt mindestens 80 Gew. %. Styrol-Acrylat-Copolymere umfassen neben den genannten Alkyl(meth)acrylaten als Hauptmonomer in der Regel mindestens 30 Gew. %, bevorzugt mindestens 40 Gew. % und besonders bevorzugt etwa 50 Gew. % Styrol. Die Polyacrylate bzw. Styrol-Acrylat-Copolymere (A1) können daneben noch weitere Comonomere aufweisen, insbesondere solche mit funktionellen Gruppen wie Hydroxy-, Carboxy- oder Carboxamidgeruppen. Beispiele umfassen (Meth)acrylsäure, Itaconsäure, Maleinsäure, Fumarsäure, (Meth)acrylamid oder Hydroxyalkyl(meth)acrylate. Bevorzugt handelt es sich bei weiteren Comonomeren um saure Comonomere. Weiterhin können optional auch noch vernetzenende Monomere in geringen Mengen, üblicherweise weniger als 4 Gew. %, bevorzugt weniger als 2 Gew. %, anwesend sein. Beispiele umfassen Butandiol(meth)acrylat, Hexandioldi(meth)acrylat oder Allylacrylat.

Polyacrylate (A1) können in prinzipiell bekannter Art und Weise mittels Emulsionspolymerisation hergestellt werden. Weitere Einzelheiten zu deratigen Polymeren sowie deren Herstellung sind beispielsweise in EP-A 157 133, WO 99/46337, oder in *"Paints and Coatings, 2.5. Acrylic Coatings"in* Ullmann's Encyclopedia of Technical Chemistry, 6th Edition 2000, Electronic Release offenbart. Der Fachmann trifft unter den prinzipiell möglichen Polyacrylaten (A1) je nach den gewünschten Eigenschaften der Schicht eine geeignete Auswahl.

Insbesondere geeignet sind Styrol-Acrylat-Copolymere, welche als Hauptmonomere mindestens ein elastomeres Acrylat wie beispielsweise n-Butyl(meth)acrylat, n-Hexyl(meth)acrylat, n-Octylacrylat oder 2-Ethylhexyl(meth)acrylat im Gemisch mit Styrol sowie als Nebenmonomer mindestens ein saures Monomer, wie beispielsweise (Meth)acrylsäure umfassen. Zur Verwendung als Bindemittel für die Formulierung können die Säuregruppen ganz oder teilweise mit geeigneten Basen wie beispielsweise Ammoniak neutralisiert werden.

Die eingesetzten Polyacrylate sollten in der Regel eine Glasübergangstemperatur T_{g} im Bereich von 0 bis 60°C, bevorzugt im Bereich von 5 bis 40°C aufweisen (gemessen nach der DSC-Methode nach DIN EN ISO 11357). Die Glasübergangstemperatur kann vom Fachmann in prinzipiell bekannter Art und Weise durch die Auswahl und das mengenverhältnis von Hart- und Weichmonomeren gewählt werden.

Weiterhin können Polyacrylate (A1) mit einer mittleren Teilchengröße von 50 nm bis 400 nm, besonders bevorzugt 80 nm bis 250 nm eingesetzt werden (gemessen mit dem Malvern^{®} Autosizer 2 C).

Geeignete Acrylat- bzw. Styrol-Acrylat-Dispersionen zur Herstellung von Korrosionsschutzanstrichen sind kommerziell erhältlich, beispielsweise als Acronal^{®} S 760 oder Acronal^{®} LR 8977 (Fa. BASF Aktiengesellschaft) oder Acronal^{®} Optive 410 (Fa. BASF Corporation).

### Styrol-Alkadien-Polymere (A2)

Weiterhin handelt es sich bei dem Bindemittelsystem für atmosphärisch härtbare Systeme um eine wässrige oder überwiegend wässrige Dispersion von Styrol-Alkadien-Polymeren (A2).

Wässrige Dispersionen von Styrol-Alkadien-Polymeren (A2) zur Herstellung von Korrosionsschutzanstrichen sind dem Fachmann prinzipiell bekannt und beispielsweise in EP-A 47380 beschrieben. Es kann sich bevorzugt um Primärdispersionen aber auch um Sekundärdispersionen handeln.

Geeignete Polymere (A2) umfassen als Hauptmonomere Styrol sowie mindestens ein konjugiertes aliphatisches Dien (Alkadien). Bei den Alkadienen kann es sich beispielsweise um Butadien, Isopren, 1,3-Pentadien oder Dimethylbutadien handeln. Das Styrol kann auch noch mit Alkylgruppen substituiert sein. Beispiele umfassen α-Methylstyrol oder 4-Methylstyrol. Bevorzugt handelt es sich bei den Hauptmonomeren um Styrol und Butadien. In der Regel enthalten die Polymere zumindest 20 Gew. % Styrol und 20 Gew. % Alkadiene, wobei die Menge der Hauptmonomere zusammen in der Regel mindestens 60 Gew. %, bevorzugt mindestens 80 Gew. % beträgt. Die Mengenangaben beziehen sich jeweils auf die Summe aller Monomere. Sie können darüber hinaus noch weitere Comonomere aufweisen. Zu nennen sind hier einerseits ethylenisch ungesättige Carbonsäuren und/oder Discarbonsäuren wie beispielsweise (Meth)acrylsäure, Maleinsäure oder Itaconsäure. Weiterhin kann es sich um ethylenisch ungesättigte Carbonsäurenitrile wie (Meth)acrylnitril sowie Alkyl(meth)acrylate wie Methyl(meth)acrylat, n-Butyl(meth)acrylat, n-Hexyl(meth)acrylat, n-Octylacrylat oder 2-Ethylhexyl(meth)acrylat handeln.

Styrol-Alkadien-Polymere (A2) können in prinzipiell bekannter Art und Weise mittels Emulsionspolymerisation hergestellt werden. Weitere Einzelheiten zu Styrol-Butadien-Polymeren für Beschichtungsstoffe sowie deren Herstellung sind beispielsweise in *"*Paints and Coatings, 2.4.8. Polystyrene and Styrene Copolymers"in Ullmann's Encyclopedia of Technical Chemistry, 6th Edition 2000, Electronic Release offenbart.

Insbesondere geeignet sind Styrol-Butadien-Polymere, welche als Nebenmonomer ein oder mehrere saure Monomere, wie beispielsweise (Meth)acrylsäure umfassen, bevorzugt in einer Menge von 0,5 bis 5 Gew. %. Zur Verwendung als Bindemittel für die Formulierung können die Säuregruppen bevorzugt ganz oder teilweise mit geeigneten Basen wie beispielsweise Ammoniak neutralisiert werden.

Die eingesetzten Styrol-Butadien-Polymere (A2) sollten in der Regel eine Glasübergangstemperatur T_{g} im Bereich von 0 bis 60°C, bevorzugt im Bereich von 5 bis 40°C aufweisen. Die Glasübergangstemperatur kann vom Fachmann in prinzipiell bekannter Art und Weise durch die Auswahl und das Mengenverhältnis von Hart- und Weichmonomeren gewählt werden.

Weiterhin können Styrol-Butadien-Polymere (A2) mit einer mittleren Teilchengröße von 50 nm bis 400 nm, besonders bevorzugt 80 nm bis 250 nm eingesetzt werden (wie oben gemessen).

### Polyurethane (A3)

Weiterhin handelt es sich bei dem Bindemittelsystem für atmosphärisch härtbare Systeme um eine wässrige oder überwiegend wässrige Dispersion von Polyurethanen (A3).

Wässrige Dispersionen von Polyurethanen (A3) zur Herstellung von Korrosionsschutzanstrichen sind dem Fachmann prinzipiell bekannt. Einzelheiten zu Polyurethanen für Beschichtungsstoffe sowie deren Herstellung sind beispielsweise in "Paints and Coatings, 2.9 Polyurethane Coatings in "Ullmann's Encyclopedia of Technical Chemistry, 6th Edition 2000, Electronic Release offenbart. Bei den wässrigen Dispersionen der Polyurethanen (A3) kann es sich sowohl um Primärdispersionen wie um Sekundärdispersionen handeln.

Polyurethane für wässrige Dispersionen können in prinzipiell bekannter Art und Weise aus üblichen Diisocyanaten sowie Diolen aufgebaut werden. Im Hinblick auf gute Filmbildung und Elastizität kommen hierzu insbesondere Diole mit einem zahlenmittleren Molekulargewicht Mₙ von etwa 500 bis 5000 g/mol, bevorzugt etwa 1000 bis 3000 g/mol in Frage. Hierzu können sowohl Polyether- wie Polyesterdiole eingesetzt werden. Die Menge derartiger Diole mit höherem Molekulargewicht beträgt üblicherweise 10 bis 100 mol % bezüglich der Summe aller Diole. Die gewünschte Härte und Elastizität des Films lässt sich steuern, indem man neben dem bereits genannten Diol noch niedermolekulare Diole mit einem zahlenmittleren Molekulargewicht Mₙ von etwa 60 bis 500 g/mol einsetzt.

Zum Aufbau von Polyurethanen für wässrige Dispersionen werden darüber hinaus Monomere eingesetzt, welche wenigstens eine Isocyanatgruppe oder eine gegenüber Isocyanatgruppen reaktive Gruppe sowie zusätzlich mindestens eine hydrophile Gruppe umfassen. Hierbei kann es sich um nichtionische Gruppen wie beispielsweise Polyoxyethylengruppen, um saure Gruppen wie COOH-, Sulfonat- oder Phosphonatgruppen oder um basische Gruppen wie Aminogruppen handeln. Bevorzugt handelt es sich um saure Gruppen. Zur Verwendung als Bindemittel für die Formulierung können die Säuregruppen bevorzugt ganz oder teilweise mit geeigneten Basen neutralisiert werden. Bevorzugt hierzu sind Ammoniak oder Amine. Weitere Einzelheiten zu derartigen Polyurethandispersionen sowie deren Herstellung sind in WO 2005/005565, Seite 4, Zeile 13 bis Seite 14, Zeile 14 ausführlich beschrieben. Weitere Beispiele geeigneter Polyurethane sind in US 5,707,941 oder in WO 2004/101638, insbesondere Seite 2, Zeile 31 bis Seite14, Zeile 11 offenbart.

Es kann sich auch um modifizierte Polyurethane handeln. Beispielsweise kann es sich um oxidativ härtende Urethanalkyde handeln. Zur Herstellung können beispielsweise Triglyceride ungesättigter Fettsäuren teilweise hydrolysiert werden. Die entstehende OH-Gruppe kann bei der Polyurethanherstellung mit den Isocyanatgruppen reagieren.

Weiterhin können Polyurethane (A3) mit einer mittleren Teilchengröße von nicht mehr als 1000 nm, bevorzugt weniger als 500, besonders bevorzugt weniger als 200 nm, und insbesondere 20 bis 200 nm eingesetzt werden.

### Alkydharze (A4)

Ferner handelt es sich bei dem Bindemittelsystem für atmosphärisch härtbare Systeme um eine wässrige oder überwiegend wässrige Dispersion von Alkydharzen (A4).

Wässrige Dispersionen von Alkydharzen (A4) zur Herstellung von Korrosionsschutzanstrichen sind dem Fachmann prinzipiell bekannt. Bei Alkydharzen (A4) handelt es sich um oxidativ härtende Polykondensationsharze aus Polyolen und mehrwertigen Carbonsäuren, bei denen mindestens eine OH-Gruppe des Polyols mit fetten Ölen und/oder natürlichen und/oder synthetischen einfach oder mehrfach ungesättigten Fettsäuren verestert ist, wobei mindestens eines der eingesetzten Polyole tri- oder höherfunktionell sein muss.

Beispiele bevorzugter mehrwertiger Alkohole umfassen Glycerin, Pentaerythrit, Trimethylolethan, Trimethylolpropan, verschiedene Diole wie Ethan-/Propandiol, Diethylenglykol, Neopentylglykol.

Bevorzugte mehrwertige Carbonsäuren sind Phthalsäure(anhydrid) (PSA), Isophthalsäure, Terephthalsäure, Trimellitsäureanhydrid, Adipinsäure, Azelainsäure, Sebacinsäure, besonders bevorzugt ist Phthalsäure(anhydrid).

Als Ölkomponente bzw. Fettsäure kommen beispielsweise trocknende Öle, wie Leinöl, Oiticicaöl oder Holzöl, halbtrocknende Öle, wie Sojaöl, Sonnenblumenöl, Safloröl, Ricinenöl oder Tallöl, nicht-trocknende Öle, wie Ricinusöl, Kokosöl oder Erdnußöl oder freie Fettsäuren obiger Öle in Betracht.

Die Molmasse Mₙ typischer Alkydharze liegt zwischen 1500 und 20000 g/mol, bevorzugt zwischen 3500 und 6000 g/mol. Die Säurezahl beträgt bevorzugt 2 bis 30 mg KOH/g, bei wasserverdünnbaren Harzen auch 35-65 mg KOH/g. Die OH-Zahl beträgt in der Regel bis zu 300, bevorzugt bis zu 100 mg KOH/g.

Der Begriff "Alkydharze" soll auch modifizierte Alkydharze wie styrolmodifizierte Alkydharze, Urethanalkyde, Urethanöle oder epoxyharzmodifizierte Alkydharze umfassen. Derartige modifizierte Alkydharze sind dem Fachmann bekannt.

Weitere Einzelheiten zu Alkydharzen (A4) für Beschichtungsstoffe sowie deren Herstellung sind beispielsweise in *"*Paints and Coatings, 2.6. Alkyd Coatings" in Ullmann's Encyclopedia of Technical Chemistry, 6th Edition 2000, Electronic Release sowie in "Lackformulierung und Leckrezeptur", Hrsg. Ulrich Zorll, S. 188 ff, Curt R. Vinzentz Verl., Hannover, 2003 offenbart.

Die eingesetzten Alkydharze (A4) sollten in der Regel eine Glasübergangstemperatur T_{g} im Bereich von 0 bis 60°C, bevorzugt von 5 bis 40°C aufweisen.

### Füllstoffe und Pigmente (C)

Die für das erfindungsgemäße Verfahren eingesetzten Zubereitungen, beispielsweise die genannten thermisch, fotochemisch oder unter atmosphärischen Bedingungen härtbaren Zubereitungen, umfassen weiterhin mindestens einen feinteiligen anorganischen Füllstoff bzw. anorganisches Pigment (C). Der Füllstoff kann auch eine organische Beschichtung, beispielsweise zur Hydrophobierung oder Hydrophilierung umfassen. Der Füllstoff sollte eine durchschnittliche Partikelgröße von 10 µm nicht überschreiten. Bevorzugt beträgt die durchschnittliche Partikelgröße 10 nm bis 9 µm und besonders bevorzugt 100 nm bis 5 µm. Bei runden oder annähernd runden Partikeln bezieht sich diese Angabe auf den Durchmesser, bei unregelmäßig geformten, wie bspw. bei nadelförmigen Partikeln auf die längste Achse. Mit der Partikelgröße ist die Primärpartikelgröße gemeint. Dem Fachmann ist selbstverständlich bekannt, dass sich feinteilige Feststoffe häufig zu größeren Partikel agglomerieren, die zur Verwendung intensiv dispergiert werden müssen. Die Partikelgröße wird vom Fachmann je nach den gewünschten Eigenschaften der Schicht gewählt. Sie richtet sich beispielsweise auch nach der gewünschten Schichtdicke. Im Regelfalle wird der Fachmann bei einer geringen Schichtdicke kleinere Partikel wählen.

Als Füllstoffe kommen einerseits elektrisch leitfähige Pigmente bzw. Füllstoffe in Frage. Derartige Zusätze können zur Verbesserung der Schweißbarkeit und der Verbesserung einer nachfolgenden Beschichtung mit Elektrotauchlacken eingesetzt werden. Beispiele geeigneter elektrisch leitender Füllstoffe bzw. Pigmente umfassen Phosphide, Vanadiumcarbid, Titannitrid, Molybdänsulfid, Graphit, Ruß oder dotiertes Bariumsulfat. Bevorzugt werden Metallphosphide von Zn, Al, Si, Mn, Cr, Fe oder Ni eingesetzt, insbesondere Eisenphosphide eingesetzt. Beispiele bevorzugter Metallphosphide umfassen CrP, MnP, Fe₃P, Fe₂P, Ni₂P, NiP₂ oder NiP₃.

Es können auch nichtleitende Pigmente oder Füllstoffe eingesetzt werden, wie beispielsweise feinteilige amorphe Silicium-, Aluminium- oder Titanoxide, die auch noch mit weiteren Elementen dotiert sein können. Beispielsweise kann mit Calciumionen modifiziertes amorphes Siliziumdioxid eingesetzt werden.

Weitere Beispiele von Pigmenten umfassen Korrosionsschutzpigmente wie Zinkphosphat, Zinkmetaborat oder Bariummetaborat-Monohydrat.

Selbstverständlich können auch Gemische verschiedener Pigmente eingesetzt werden. Die Pigmente werden üblicherweise in einer Menge von 20 bis 70 Gew. % eingesetzt. Die genaue Menge wird vom Fachmann je nach den gewünschten Eigenschaften der Schicht festgelegt. Bei Verwendung von Leitfähigkeitspigmenten sind die eingesetzten Mengen üblicherweise größer als bei Verwendung nicht leitender Füllstoffe. Bevorzugte Mengen bei leitfähigen Pigmenten und Füllstoffen betragen 40 bis 70 Gew. %, bevorzugte Mengen bei nicht leitfähigen Pigmenten 20 bis 50 Gew. %.

### Korrosionsinhibitoren (D)

Die erfindungsgemäß verwendeten Zusammensetzungen umfassen als organisches Korrosionsschutzmittel (D) weiterhin mindestens eine Dithiophosphinsäure und/oder deren Salze gemäß obiger Definition.

Die erfindungsgemäß verwendeten Dithiophosphinsäuren und/oder deren Salze werden üblicherweise in einer Menge von 0,25 bis 10 Gew. %, bevorzugt 0,5 bis 8 Gew. %, besonders bevorzugt 1 bis 6 Gew. % und ganz besonders bevorzugt 2 bis 5 Gew. % eingesetzt.

Sie kann selbstverständlich darüber hinaus auch noch weitere organische Korrosionsschutzmittel und/oder anorganische Korrosionsschutzmittel umfassen.

### Lösemittel (E)

Als Komponente (E) können die Zubereitungen weiterhin ein geeignetes Lösemittel, in dem die Komponenten gelöst und/oder dispergiert sind, umfassen, um einen gleichmäßigen Auftrag auf die Oberfläche zu ermöglichen. Es ist aber auch prinzipiell möglich, die Zubereitung lösemittelfrei oder im Wesentlichen lösemittelfrei als Pulverlack zu formulieren. Bevorzugt ist die Anwendung eines Lösemittels.

Geeignete Lösemittel sind solche, welche in der Lage sind, die erfindungsgemäßen Verbindungen zu lösen, zu dispergieren, zu suspendieren oder zu emulgieren. Es kann sich dabei um organische Lösemittel oder um Wasser handeln. Selbstverständlich können auch Gemische verschiedener organischer Lösemittel oder Gemische organischer Lösemittel mit Wasser eingesetzt werden. Der Fachmann trifft unter den prinzipiell möglichen Lösemitteln je nach dem gewünschten Verwendungszweck und nach der Art der eingesetzten erfindungsgemäßen Verbindung eine geeignete Auswahl.

Beispiele organischer Lösemittel umfassen Kohlenwasserstoffe wie Toluol, Xylol oder Gemische, wie sie bei der Raffination von Rohöl erhalten werden, wie beispielsweise Kohlenwasserstofffraktionen bestimmter Siedebereiche. Weitere Beispiele umfassen Ether wie THF oder Polyether wie Polyethylenglykol, Etheralkohole wie Butylglykol, Etherglykolacetate wie Butylgklykolacetat, Ketone wie Aceton, Alkohole wie Methanol, Ethanol oder Propanol.

Im Falle der oben erwähnten strahlungshärtbaren Systeme werden als Lösemittel bevorzugt die oben erwähnten Reaktivverdünner (V') eingesetzt. Selbstverständlich können aber auch bei strahlungshärtbaren Systemen noch weitere Lösemittel eingesetzt werden, welche keine vernetzbaren Gruppen aufweisen.

Weiterhin können auch Zubereitungen eingesetzt werden, die Wasser oder ein überwiegend wässriges Lösungsmittelgemisch umfassen. Darunter sollen solche Gemische verstanden werden, die zumindest 50 Gew. %, bevorzugt mindestens 65 Gew. % und besonders bevorzugt mindestens 80 Gew. % Wasser umfassen. Weitere Komponenten sind mit Wasser mischbare Lösungsmittel. Beispiele umfassen Monoalkohole wie Methanol, Ethanol oder Propanol, höhere Alkohole wie Ethylenglykol oder Polyetherpolyole und Etheralkohole wie Butylglykol oder Methoxypropanol.

Die Menge der Lösemittel wird vom Fachmann je nach den gewünschten Eigenschaften der Zubereitung und der gewünschten Applikationsmethode gewählt. Im Regelfalle beträgt das Gewichtsverhältnis der Schichtkomponenten zu dem Lösemittel 10:1 bis 1:10, bevorzugt ca. 2:1 ohne dass die Erfindung hierauf beschränkt sein soll. Es ist selbstverständlich auch möglich, zunächst Konzentrat herzustellen, und das Konzentrat erst vor Ort auf die gewünschte Konzentration zu verdünnen.

Die Zubereitung wird durch intensives Mischen der Komponenten der Zubereitung mit den Lösemitteln hergestellt. Dem Fachmann sind geeignete Misch- oder Dispergieraggregate bekannt.

### Hilfsmittel und Additive (F)

Über die beschriebenen Komponenten (A) bis (E) hinaus können die Zubereitungen darüber hinaus optional noch einen oder mehrere Hilfsstoffe und/oder Additive (F) umfassen. Derartige Hilfsstoffe und/oder Additive dienen zur Feinsteuerung der Eigenschaften der Schicht. Ihre Menge übersteigt im Regelfalle nicht 20 Gew. % bzgl. der Summer aller Komponenten mit Ausnahme der Lösemittel, bevorzugt nicht 10 %.

Beispiele geeigneter Zusatzstoffe sind farb- und/oder effektgebende Pigmente, Reaktivverdünner für die thermische Härtung, Rheologiehilfsmittel, UV-Absorber, Lichtschutzmittel, Radikalfänger, Katalysatoren für die thermische Vernetzung, Slipadditive, Polymerisationsinhibitoren, Entschäumer, Emulgatoren, Entgasungsmittel, Netz- und Dipergiermittel, Haftvermittler, Verlaufsmittel, filmbildende Hilfsmittel, rheologiesteuernde Additive (Verdicker), Flammschutzmittel, Sikkative, Hautverhinderungsmittel, sonstige Korrosionsinhibitoren, Wachse und Mattierungsmittel, wie sie aus dem Lehrbuch »Lackadditive« von Johan Bieleman, Wiley-VCH, Weinheim, New York, 1998, oder der deutschen Patentanmeldung DE 199 14 896 A1, Spalte 13, Zeile 56, bis Spalte 15, Zeile 54, bekannt sind.

### Behandlung der metallischen Oberfläche

Zur Ausführung des erfindungsgemäßen Verfahrens wird die metallische Oberfläche mit einer geeigneten Zubereitung, welche Dithiophosphinsäuren enthält, behandelt.

Die Technik des Aufbringens richtet sich nach der Art der gewünschten Korrosionsschutzschicht. Dem Fachmann sind Techniken zum Aufbringen von Korrosionsschutzschichten prinzipiell bekannt.

### Coil-Coating

Im Folgenden ist zunächst eine übliche Vorgehensweise beim Coil-Coating beispielhaft beschrieben.

Vor der Behandlung der Oberfläche mit der vernetzbaren Formulierung kann die Oberfläche optional noch gereinigt werden. Erfolgt die erfindungsgemäße Behandlung unmittelbar nach einer metallischen Oberflächenbehandlung, beispielsweise einer elektrolytischen Verzinkung oder einer Schmelztauchverzinkung von Stahlbändern, so können die Bänder im Regelfalle ohne vorherige Reinigung mit der erfindungsgemäßen Behandlungslösung in Kontakt gebracht werden. Wurden die zu behandelnden Metallbänder vor der erfindungsgemäßen Beschichtung jedoch gelagert und/oder transportiert, so sind in der Regel mit Korrosionsschutzölen versehen oder zumindest so weitgehend verschmutzt, dass eine Reinigung vor der erfindungsgemäßen Beschichtung erforderlich ist. Die Reinigung kann nach dem Fachmann bekannten Methoden mit üblichen Reinigungsmitteln erfolgen.

Bei dem erfindungsgemäßen Verfahren zum Aufbringen von Korrosionsschutzschichten, insbesondere integrierter Vorbehandlungsschichten, wird die Oberfläche des Metalls mit der Zubereitung behandelt, beispielsweise durch Sprühen, Tauchen oder Aufwalzen. Nach einem Tauchprozess kann man zum Entfernen überschüssiger Behandlungslösung das Werkstück abtropfen lassen; bei Blechen, Metallfolien oder dergleichen lässt sich überschüssige Behandlungslösung beispielsweise auch abquetschen oder abrakeln. Bei der Behandlung werden zumindest Teile des eingesetzten Polymers sowie weitere Komponenten der Zubereitung von der Oberfläche des Metalls chemisorbiert, so dass eine feste Bindung zwischen Oberfläche und den Komponenten zustande kommt. Die Behandlung mit der Zubreitung erfolgt im Regelfalle bei Raumtemperatur ohne dass damit höhere Temperaturen prinzipiell ausgeschlossen werden sein sollen.

Es kann sich bei der Behandlung um einen sogenannten "No-rinse" Prozess handeln, bei dem die Behandlungslösung unmittelbar nach dem Aufbringen ohne Abspülen direkt in einem Trockenofen eingetrocknet wird. Es ist aber auch möglich, die Oberfläche nach der Behandlung mit einer Reinigungsflüssigkeit nachzuspülen.

Bei der besonders bevorzugten Beschichtung von Metallbändern kann die Beschichtung sowohl einseitig wie beidseitig vorgenommen werden. Ganz besonders bevorzugt erfolgt die Beschichtung mittels eines kontinuierlichen Verfahrens.

Die Bandbeschichtung kann beispielsweise mittels einer kontinuierlich arbeitenden Bandbeschichtungsanlage vorgenommen werden, wie sie in Römpp Lexikon Lacke und Druckfarben, Georg Thieme Verlag, Stuttgart, New York, 1998, Seite 55, "Bandbeschichtung", oder in der deutschen Patentanmeldung DE 196 32 426 A1 beschrieben wird. Selbstverständlich können auch anders konstruierte Anlagen eingesetzt werden.

Die Geschwindigkeit des Metallbandes wird vom Fachmann entsprechend den Applikations- und Härtungseigenschaften der eingesetzten Zubereitung gewählt. In der Regel bewährt haben sich Geschwindigkeiten von 10 bis 200 m/min, bevorzugt 12 bis 120 m/min, besonders bevorzugt 14 bis 100 m/min, ganz besonders bevorzugt 16 bis 80 und insbesondere 20 bis 70 m/min.

Das Aufbringen der Zubereitungen im erfindungsgemäßen Verfahren kann in beliebiger Weise, z. B. durch Spritzen, Gießen oder Walzlackieren, erfolgen. Von diesen Applikationsverfahren ist das Walzlackieren besonders vorteilhaft und wird daher erfindungsgemäß bevorzugt verwendet.

Jeder Applikationsschritt des Walzlackierens kann mit mehreren Walzen durchgeführt werden. Vorzugsweise werden zwei bis vier und insbesondere zwei Walzen angewandt.

Beim Walzlackieren taucht die sich drehende Aufnahmewalze (Pick-up-Walze) in einen Vorrat des erfindungsgemäßen Lacks ein und übernimmt so den zu applizierenden Lack. Dieser wird von der Aufnahmewalze direkt oder über mindestens eine Übertragungswalze auf die sich drehende Applikationswalze übertragen. Von dieser aus wird der Lack durch gleichgerichtetes oder gegenläufiges Abstreifen auf das Band übertragen.
Die Zubereitung kann aber auch direkt in einen Spalt zwischen zwei Walzen gepumpt werden, was von der Fachwelt auch als Nip-Feed bezeichnet wird.
Erfindungsgemäß ist das gegenläufige Abstreifen oder das Reverse-Roller-Coating-Verfahren von Vorteil und wird deshalb bevorzugt angewandt.

Beim dem Walzlackieren können die Umlaufgeschwindigkeiten der Aufnahmewalze und der Applikationswalze von Beschichtungsprozeß zu Beschichtungsprozeß sehr stark variieren. Vorzugsweise hat die Applikationswalze eine Umlaufgeschwindigkeit, die 110 bis 125% der Bandgeschwindigkeit beträgt, und die Aufnahmewalze eine Umlaufgeschwindigkeit, die 20 bis 40% der Bandgeschwindigkeit beträgt.

Im Anschluss an das Aufbringen der eingesetzten Zubereitung im erfindungsgemäßen Verfahren wird eventuell in der Schicht vorhandenes Lösemittel entfernt und die Schicht vernetzt. Dies kann in zwei separaten Schritten erfolgen kann aber auch gleichzeitig erfolgen. Zum Entfernen des Lösemittels wird die Schicht vorzugsweise mittels einer geeigneten Vorrichtung erwärmt. Das Trocknen kann auch durch Kontaktieren mit einem Gasstrom erfolgen. Beide Methoden können kombiniert werden.

### Thermische und/oder fotochemische Vernetzung

Die Aushärtemethode richtet sich nach der Natur des Vernetzers. Das Aushärten kann thermisch, mittels aktinischer Strahlung oder kombiniert thermisch und mit aktinischer Strahlung erfolgen. Die gemeinsame Härtung mit Hitze und aktinischer Strahlung wird von der Fachwelt auch als Dual-Cure bezeichnet. Unter aktinischer Strahlung versteht der Fachmann in bekannter Art und Weise "chemisch wirksame" Strahlung, also elektromagnetische Strahlung oder Korpukularstarhlung, die in der Lage ist, chemische Reaktionen auszulösen. Beispiele elektromagnetischer Strahlung umfassen nahes Infrarot, sichtbares Licht, UV-Strahlung oder Röntgenstrahlung.

Die zum Aushärten erforderliche Temperatur richtet sich insbesondere nach dem eingesetzten vernetzbaren Bindemittelsystem. Sehr reaktive Bindemittelsysteme können bei niedrigeren Temperaturen ausgehärtet werden als weniger reaktive Bindemittelsysteme. In aller Regel wird die Vernetzung bei Temperaturen von mindestens 60°C, bevorzugt mindestens 80°C, besonders bevorzugt mindestens 100°C und besonders bevorzugt mindestens 120°C vorgenommen. Insbesondere kann die Vernetzung bei 100 bis 250°C, bevorzugt 120 bis 220°C und besonders bevorzugt bei 150 bis 200°C vorgenommen werden. Gemeint ist jeweils die auf dem Metall gefundene Spitzentemperatur (Peak metal temperature (PMT)), die durch dem Fachmann geläufige Verfahren (beispielsweise berührungslose Infrarotmessung oder Bestimmung der Temperatur mit aufgeklebten Teststreifen) gemessen werden kann.

Die Aufheizung der erfindungsgemäß aufgebrachten Lackschichten bei der thermischen Härtung erfolgt vorzugsweise durch Konvektionswärmeübertragung, Bestrahlen mit nahem oder fernem Infrarot und/oder bei Bändern auf der Basis von Eisen durch elektrische Induktion erfolgen.

Die Aufheizzeit, d.h. die Zeitdauer der thermischen Härtung variiert in Abhängigkeit von dem eingesetzten erfindungsgemäßen Lack. Vorzugsweise liegt sie bei 10 s bis 2 min.

Wird im wesentlichen die Konvektionswärmeübertragung angewandt, werden bei den bevorzugten Bandlaufgeschwindigkeiten Umluftöfen einer Länge von 30 m bis 50 m, insbesondere 35 m bis 45 m, benötigt. Die Umlufttemperatur kann bei bis zu 350 °C liegen.

Bei der Strahlungshärtung kann die Trocknung und Aushärtung der Beschichtungen unter normalen Temperaturbedingungen, d.h. ohne Erhitzung der Beschichtung erfolgen. Die erfindungsgemäß verwendeten Mischungen können jedoch auch zur Herstellung von Beschichtungen eingesetzt werden, die nach Applikation bei erhöhter Temperatur, z.B. bei 40 bis 150°C vorzugsweise 40 bis 130°C und insbesondere bei 40 bis 100°C getrocknet und ausgehärtet werden.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler oder Excimerstrahler. Je nach der Art des eingesetzten Fotoinitiators kann UV-, VIS- oder NIR-Strahlung eingesetzt werden. Selbstverständlich können auch Stahlenquellen unterschiedlicher Wellenlängenbereiche eingesetzt werden.

Die Härtung kann auch mittels Elektronenstrahlung erfolgen, beispielsweise solchen mit 150 bis 300 keV.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Durch das erfindungsgemäße Verfahren ist eine Korrosionsschutzschicht, insbesondere eine integrierte Vorbehandlungsschicht, auf einer metallischen Oberfläche erhältlich. Bevorzugt handelt es sich um eine Schicht auf der Oberfläche von Eisen, Stahl, Zink oder Zinklegierungen, Aluminium oder Aluminiumlegierungen. Die exakte Struktur und Zusammensetzung der integrierten Schicht ist uns nicht bekannt. Sie umfasst neben den Reaktionsprodukten des Polymers sowie des Vernetzers, Dithiophosphinsäuren bzw. deren Salze sowie optional weitere Komponenten. Daneben können auch noch aus der Metalloberfläche herausgelöste und wieder abgeschiedene Komponenten, wie beispielsweise übliche amorphe Oxide des Aluminiums oder Zinks sowie ggf. weiterer Metalle vorhanden sein. Die Zusammensetzung der Schicht scheint nicht homogen zu sein, sondern Konzentrationsgradienten aufzuweisen.

Die Dicke der Korrosionsschutzschicht wird vom Fachmann je nach den gewünschten Eigenschaften der Schicht festgelegt. Für Coil-Coating-Anwendungen, insbesondere zum Aufbringen integrierter Korrosionsschutzschichten , hat sich im Regelfalle eine Dicke von 1 bis 25 µm bewährt, auch wenn in Spezialfällen die Dicken auch noch außerhalb dieser Bereiche liegen können. Bevorzugt ist eine Dicke von 3 bis 15 µm, besonders bevorzugt 4 bis 10 µm und ganz besonders bevorzugt sind 5 bis 8 µm. Die Dicke ergibt sich aus der Menge der jeweils aufgebrachten Zusammensetzung.

Auf die metallische Oberfläche mit der erfindungsgemäß aufgebrachten Korrosionsschutzschicht, insbesondere mit einer integrierten Vorbehandlungsschicht, können noch weitere Lackschichten aufgebracht werden.

Dies kann in der beschriebenen Bandbeschichtungsanlage vorgenommen werden. Es werden dann mehrere Applikations- sowie optional Härtungsstationen hintereinander geschaltet. Alternativ kann aber nach der Applikation und der Härtung der Korrosionsschutzschicht das beschichtete Band wieder aufgerollt und weitere Schichten erst zu einem späteren Zeitpunkt in anderen Anlagen aufgebracht werden.

Die Weiterverarbeitung der beschichteten Metallbänder kann vor Ort erfolgen, oder sie können zur Weiterverarbeitung an einen anderen Ort transportiert werden. Hierzu können sie beispielsweise mit abziehbaren Schutzfolien versehen werden.

Mit einer integrierten Vorbehandlungsschicht versehene Bänder können ohne weitere Lackierung zunächst zerkleinert und zu Formteilen weiterverarbeitet werden. Verschiedene Formteile können auch durch Schweißen zusammengefügt werden. Beispiele geeigneter formgebender Bearbeitungsmethoden sind Pressen und Tiefziehen. Die resultierenden Profilelemente und Formteile, sind kratzfest, korrosionsstabil, witterungsstabil und chemikalienstabil und können problemlos mit den unterschiedlichsten Lacken überlackiert werden. Der Lack ohne leitfähige Pigmente kann als KTL-Ersatz benutzt werden, wenn er in einer Schichtdicke etwa 10-15 µm angewendet wird.

### Atmosphärischer Korrosionsschutz

Zum Aufbringen von Korrosionsschutzschichten für den atmosphärischen Korrosionsschutz hat sich die folgende Vorgehensweise bewährt.

Bei Beschichtungen für den atmosphärischen Korrosionsschutz kann es kann sich um alle Arten von Korrosionsschutzbeschichtungen handeln, wie beispielsweise Grundierungen (I), Zwischenbeschichtungen (II) und Deckbeschichtungen (III). Selbstverständlich kann es sich auch um Korrosionsschutzbeschichtungen handeln, welche die Eigenschaften von mindestens zwei dieser Schichten oder aller drei Schichten kombinieren, und somit zu einem vereinfachten Schichtaufbau beitragen. Weiterhin kann es sich um eine Fertigungsbeschichtung handeln. Hierunter versteht der Fachmann eine Schicht, die auf frisch gestrahlten Stahl aufgebracht werden kann, um Korrosionsschutz noch während der Fertigung von Stahlbauteilen, also beispielsweise während der Zusammenschweißens von Teilen, zu gewährleisten.

Das Verfahren unter Verwendung von Dithiophosphinsäuren kann dem Erstschutz oder auch der Instandsetzung dienen.

Im Regelfalle empfiehlt es sich, die metallische Oberfläche für die Durchführung des Verfahrens vorzubereiten, auch wenn dies nicht in jedem Fall absolut zwingend ist. Unter Oberflächenvorbereitung für die Durchführung von Korrosionsschutzmaßnahmen versteht der Fachmann die Reinigung der Oberfläche von allen Verunreinigungen sowie das Einstellen einer auf die Korrosionsschutzmaßnahme abgestimmten Oberflächenrauigkeit. Beispiele für Reinigungsverfahren umfassen das Reinigen mit Wasser oder Lösemitteln, Beizen mit geeigneten Formulierungen oder Hochdruckreinigen. Beispiele weiterer Maßnahmen umfassen Schleifen und insbesondere Strahlen der Oberfläche, beispielsweise Sandstrahlen sowie weiterhin Flammstrahlen. Es können hierbei alle anhaftenden Schichten bis hinunter zum blanken Metall abgetragen werden. Es ist aber auch möglich, unter Anwendung weniger intensiver Methoden nur schlecht haftende Schichten abzutragen, während intakte Schichten auf der Oberfläche verbleiben. Eine mögliche Technik hierzu ist das sogenannte Sweep-Strahlen.

Zur Ausführung des Verfahrens wird mindestens eine Korrosionsschutzschicht mit einer Dicke von mindestens 15 µm auf die metallische Oberfläche aufgebracht, wobei man die beschriebene, unter atmosphärischen Bedingungen vernetzbare Zubereitung einsetzt.

Die Korrosionsschutzschicht kann dabei unmittelbar auf die blanke metallische Oberfläche aufgebracht werden oder aber auf eine bereits mit einer Korrosionsschutzschicht vorbeschichtete Oberfläche.

Bevorzugt handelt es sich bei der mindestens einen Korrosionsschutzschicht um eine Grundierungsschicht (I), welche entweder direkt auf das blanke Metall oder auf eine eine Fertigungsbeschichtung aufweisende Metalloberfläche aufgebracht wird. Die optional vorhandene Fertigungsbeschichtung kann ebenfalls mit der Formulierung der Grundierungsschicht oder aber auch mittels einer anderen Formulierung erhalten werden.

Zum Aufbringen können die üblichen, dem Fachmann bekannten Techniken eingesetzt werden. Bevorzugt wird die Zubereitung aufgestrichen oder aufgespritzt.

Nach dem Aufbringen auf die Oberfläche härtet die aufgebrachte Beschichtung unter atmosphärischen Bedingungen aus. Dies kann im einfachsten Falle durch das allmähliche Verdampfen des Lösemittels erfolgen. Je nach der Natur des eingesetzten Bindemittels können noch andere Vernetzungsprozesse ablaufen. Einzelheiten hierzu wurden bereits oben dargestellt.

Je nach der Dicke der gewünschten Korrosionsschutzschicht, kann die gesamte Schicht in einem einzigen Arbeitsgang aufgebracht werden, oder aber es können auch mehrere gleichartige Schichten nacheinander aufgebracht und jeweils gehärtet werden, um die gewünschte Gesamtschichtdicke der Korrosionsschutzschicht zu erreichen.

Auf die Grundierung (I) können noch weitere Korrosionsschutzschichten aufgebracht werden. Art und Anzahl der weiteren Schichten werden vom Fachmann bestimmt. Insbesondere kann die Grundierung (I) in weiteren Arbeitsgängen mit einer Zwischenschicht (II) und mit einer Deckschicht (III) versehen werden. Hierzu können im Prinzip beliebige Lacksysteme verwendet werden, vorausgesetzt, es treten in Kombination mit der Grundierung (I) keine unerwünschten Effekte auf. Dithiophosphinsäuren können als Korrosionsinhibitoren in allen 3 Schichten eingesetzt werden.

In einer weiteren, bevorzugten Ausführungsform des Verfahrens wird zunächst eine integrierte Grundierung (la) aufgebracht, welche direkt mit einem Decklack (III) überlackiert werden kann. Eine integrierte Grundierung kombiniert also die Eigenschaften der Grundierung (I) und der Zwischenschicht (III).

In einer weiteren, bevorzugten Ausführungsform wird nur eine einzige integrierte Korrosionsschutzschicht (Ib) aufgebracht, welche nicht überlackiert zu werden braucht. Eine integrierte Korrosionsschutzschicht kombiniert also die Eigenschaften aller drei Schichten.

Die Dicke einer ausgehärteten, mindestens einen Korrosionsschutzschicht für den atmosphärischen Korrosionsschutz beträgt im Regelfalle mindestens 15 µm, bevorzugt mindestens 25 µm, besonders bevorzugt mindestens 40 µm, ganz besonders bevorzugt mindestens 60 µm und beispielsweise mindestens 100 µm. Sie wird vom Fachmann je nach den gewünschten Eigenschaften und dem Einsatzzweck der Schicht festgelegt.

Fertigungsbeschichtungen sind üblicherweise dünn, beispielsweise 15 bis 25 µm. Die Dicke von Korrosionsschutzschichten, bei denen es sich nicht um Fertigungsschichten handelt, beträgt in der Regel mindestens 25 µm, bevorzugt mindestens 40 µm, besonders bevorzugt mindestens 60 µm und ganz besonders bevorzugt mindestens 100 µm.

Die obere Grenze für die Gesamtschichtdicke im atmosphärischen Korrosionsschutz, d.h. die Dicke aller aufgebrachten Korrosionsschutzschichten zusammen, beträgt 2 mm, bevorzugt weniger als 1,5 mm, besonders bevorzugt weniger als 1 mm, ganz besonders bevorzugt weniger als 800 µm und insbesondere weniger als 500 µm.

Die folgenden Beispiele sollen die Erfindung näher erläutern.

### Basisrezepturen

Die Korrosionsschutzwirkung von Dithiophosphinsäuren wurde in verschiedenen Korrosionsschutzformulierungen getestet:
Basisrezeptur für Coil-Coating-Lack (organisch) auf Basis Epoxybindemitteln
Für die Formulierung zur Herstellung einer integrierten Vorbehandlungsschicht wurden die folgenden Komponenten eingesetzt:

| Komponente | Beschreibung | Menge [Gewichtsteile] |
|---|---|---|
| Bindemittel mit vernetzenden Gruppen | Epoxybindemittel auf Basis Bisphenol A (Molekulargewicht 1000 g/mol, Viskosität 13dPas/s und 50% Festkörpergehalt) | 26,9 |
| Füllstoffe | Hydrophile pyrogene Kieselsäure (Aerosil® 200V, Firma Degussa) | 0,16 |
| | Talkum Finntalk M5 | 2,9 |
| | Weißpigment Titan Rutil 2310 | 10,8 |
| | mit Calciumionen modifiziertes Siliziumdioxid (Shieldex®, Grace Division) | 3,0 |
| | Zinkphosphat (Sicor® ZP-BS-M, Waardals Kjemiske Fabriken) | 4,1 |
| | Schwarzpigment (Sicomix® Schwarz, BASF AG) | 1,0 |
| Lösemittel | Butylglykol | 5,0 |

Die Komponenten wurden in einem geeigneten Rührgefäß in der angegebenen Reihenfolge vermischt und mit einem Dissolver während zehn Minuten vordispergiert. Die resultierende Mischung wurde in einer Perlmühle mit Kühlmantel überführt und mit 1,8-2,2 mm-SAZ-Glasperlen vermischt. Das Mahlgut wurde während 1 h 30' Minuten gemahlen. Anschließend wurde das Mahlgut von den Glasperlen abgetrennt.

Dem Mahlgut wurden unter Rühren in der angegebenen Reihenfolge mit 5,9 Gewichtsteilen eines blockierten Hexamethylendiisocyanates (Desmodur^{®} VP LS 2253, Fa. Bayer AG) und 0,4 Gewichtsteilen eines handelsüblichen zinnfreien Vernetzungskatalysators (Borchi^{®} VP 0245, Fa. Borchers GmbH) zugegeben.

### Beispiele 1 bis 4, Vergleichsbeispiele 1 und 2

Der Basisrezeptur wurden jeweils zusätzlich jeweils 3 Gewichtsteile eines der erfindungsgemäß zu verwendenden Dithiophosphinsäuren bzw. deren Salze eingesetzt. Die jeweils verwendeten Dithiophosphinsäuren sind jeweils in Tabelle 1 zusammengestellt.

Zu Vergleichszwecken wurde eine Basisrezeptur ohne Zusatz belassen, außerdem wurde in einer Probe ein anderer Inhibitor verwendet.

**Tabelle 1: Für die Versuche eingesetzte Korrosionsinhibitoren**

| Nr. | Korrosionsinhibitor |
|---|---|
| Beispiel 1 | Di-p-toloyldithiophosphinsäure |
| Beispiel 2 | Natrium-Diisobutyldithiophosphinat |
| Beispiel 3 | Dicyclohexyldithiophosphinsäure |
| Beispiel 4 | Natrium-Dicyclohexyldithiophosphinat |
| Vergleichsbeispiel 1 | Ohne |
| Vergleichsbeispiel 2 | 3-Phenylthiopropionamid |

### Aufbringen der integrierten Vorbehandlungsschichten nach dem erfindungsgemäßen Verfahren

Die Zusammensetzungen wurden mit Hilfe von Stabrakeln auf Stahlplatten der Sorte Z (OEHDG 2 Firma Chemetall) und auf Aluminiumplatten AlMgSi (AA6016 Firma Chemetall) in einer Naßschichtdicke appliziert, dass nach der Härtung in einem Durchlauftrockner bei einer Umlufttemperatur von 185 °C und einer Objekttemperatur von 171 °C Beschichtungen einer Trockenschichtdicke von 6 µm resultierten.

### Test der Beschichtungen

### Test der Stahlbleche:

Mit Stahlplatten wurde ein standardisierter 10 Wochen-Klimawechseltest durchgeführt (VDA Klimawechseltest; VDA Prüfblatt 621 - 415 Feb82).
Nach Beendigung der Korrosionsbelastung wurden die Bleche visuell ausgewertet. Es wurde sowohl die Bildung von Korrosionsprodukten auf der unbeschädigten Lackfläche als auch die Unterwanderungsneigung an Kante und Ritz beurteilt.

Dabei wurden folgende Noten vergeben
- = mehr Korrosionsschäden als bei der Nullprobe
0 = Korrosionsschäden wie bei der Nullprobe
+ = weniger Korrosionsschäden als bei der Nullprobe
++ = wesentlich weniger Korrosionsschäden als bei der Nullprobe

### Test der Aluminiumbleche:

An Aluminiumplatten wurde der essigsaure Salzsprühtest ESS (DIN 50021 Juni 88) durchgeführt. Nach Beendigung der Korrosionsbelastung wurden die Bleche visuell ausgewertet. Dabei wurden die kreisförmigen Enthaftungen auf der gesamten Lackfläche bewertet.

Dabei wurden folgende Noten vergeben
0 = Korrosionschäden wie bei der Nullprobe
+ = weniger Korrosionsschäden als bei der Nullprobe
++ = wesentlich weniger Korrosionsschäden als bei der Nullprobe

Die Ergebnisse der Tests sind in Tabelle 2 zusammengestellt:

**Tabelle 2: Zusammenstellung der Ergebnisse der Korrosionsschutztests**

| Formulierung gemäß | Inhibitoren | Bewertung Stahl | Bewertung Aluminium |
|---|---|---|---|
| Beispiel 1 | Di-p-toloyldithiophosphinsäure | ++ | ++ |
| Beispiel 2 | Natrium-Diisobutyldithiophosphinat | ++ | ++ |
| Beispiel 3 | Dicyclohexyldithiophosphinsäure | ++ | ++ |
| Beispiel 4 | Natrium-Dicyclohexyldithiophosphinat | ++ | 0 |
| Vergleichsbeispiel 1 | Ohne | 0 | 0 |
| Vergleichsbeispiel 2 | 3-Phenylthiopropionamid | 0 | 0 |

Die Beispiele und Vergleichsbeispiele zeigen, dass mit Dithiophosphinsäuren ausgezeichnete Ergebnisse erzielt werden. Sie zeigen weiterhin, dass durchaus nicht jeder Inhibitor für dünne Korrosionsschutzschichten gleichermaßen gut geeignet ist.

### Fotochemisch vernetzbare Mischung (Basisrezeptur)

| **Komponente** | **Beschreibung** | **Menge [Gewichtsteile]** |
|---|---|---|
| | Aliphatisches Urethanacrylat, 70%ig in monofunktionellem Acrylestermonomer | 45 |
| | Saurer Haftvermittler auf Basis eines sauren Phosphorsäureesters / Acrylesters / Methacrylesters | 6,5 |
| | Reaktivverdünner: Monofunktionelles Acrylestermonomer | 20,5 |
| | Handelsüblicher Fotoinitiator (Irgacure®) 184 | 7,5 |
| | Amorphe Kieselsäure | 20 |
| | Zinknitroisophtalat | 0,5 |

Die Komponenten wurden in einem geeigneten Rührgefäß in der angegebenen Reihenfolge vermischt und mit einem Dissolver während zehn Minuten vordispergiert. Die resultierende Mischung wurde mit 1,8-2,2 mm-SAZ-Glasperlen vermischt. Das Mahlgut wurde während 2 Stunden im Skandex dispergiert. Anschließend wurde das Mahlgut von den Glasperlen abgetrennt.

Der Basisrezeptur wurden zusätzlich 1,2 und 3 Gewichtsteilen der erfindungsgemäß zu verwendenden Dithiophosphinsäure zugesetzt. Zu Vergleichszwecken wurde eine Basisrezeptur ohne Zusatz belassen.

**Tabelle 3: Für fotochemisch härtbare Systeme eingesetzte Korrosionsinhibitoren**

| **Nr.** | **Inhibitor** |
|---|---|
| Beispiel 5 | 1 % Di-p-toloyldithiophosphinsäure |
| Beispiel 6 | 2% Di-p-toloyldithiophosphinsäure |
| Beispiel 7 | 3% Di-p-toloyldithiophosphinsäure |
| Vergleichsbeispiel 3 | Ohne |

### Aufbringen der integrierten Vorbehandlungsschichten nach dem erfindungsgemäßen Verfahren

Die Zusammensetzungen wurden mit Hilfe von Stabrakeln auf Stahlplatten der Sorte Z (OEHDG 2 Firma Chemetall) in einer Schichtdicke von 7 µm appliziert. Die Härtung erfolgte mit einer UV- Anlage bei einer Bandgeschwindigkeit von 2 m/min mit 2 Quecksilbermitteldruckstrahler mit einer Leistungsaufnahme von jeweils 120 W/cm

### Test der Stahlbleche:

An den Stahlblechen wurde ein Salzsprühtest durchgeführt. Nach Beendigung der Korrosionsbelastung wurden die Bleche visuell ausgewertet. Dabei wurde der Rostgrad entsprechend DIN 53210 bewertet.

Die Ergebnisse der Tests sind in Tabelle 4 zusammengestellt:

**Tabelle 4: Zusammenstellung der Ergebnisse der Korrosionsschutztests in UV- Lacken**

| Formulierung gemäß | Bewertung nach 200 h Salzsprühtest | Bewertung nach 500 h Salzsprühtest |
|---|---|---|
| Beispiel 5 | R2, m3/g1 | R3, m5/g2-3 |
| Beispiel 6 | R0, m0/g0 | R1, m0/g0 |
| Beispiel 7 | R0, m0/g0 | R0, m0/g0 |
| Vergleichsbeispiel 3 | R4, m3/g2 | R5, m5/ g5 |

### Richtformulierung für Korrosionsschutz-Grundierungen

Zur anwendungstechnischen Prüfung für den atmosphärischen Korrosionsschutz wurde eine Korrosionsschutzformulierung auf Basis einer handelsüblichen wässrigen Styrol-Acrylat-Dispersion für Anstrichstoffe (Acronal^{®} Optive 410, Fa. BASF Corp.) eingesetzt. Die verwendete Dispersion weist die folgenden Eigenschaften auf:

| | |
|---|---|
| Feststoffgehalt | 49 - 51 % |
| pH | 7,5 - 8,5 |
| Brookfield-Viskosität | 500 - 1000 cps |
| Dichte | 1,06 g/cm³ |
| Minimum Film Forming Temperature (MFFT, nach ASTM D 2354)) | ca. 12°C |
| Partikelgröße | ca. 110 nm |

Die Herstellung der Testrezeptur erfolgte nach folgender allgemeiner Vorschrift:
393,4 g der Styrol-Acrylat-Dispersion werden mit 2,2 g eines handelsüblichen Entschäumers für Lacke (Mischung von Polysiloxanen und hydrophoben Feststoffen in Polyglykol; BYK^{®} 022, Fa. Byk) versetzt, anschließend wird mittels eines Dispermaten eine Mischung bestehend aus 0,6 g eines anionischen Dispergiermittels (saurer Phosphorsäureester eines Fettalkoholalkoxylates; Lutensit^{®} A-EP, Fa. BASF AG), 11,0 g konz. Ammoniak und 58,6 g Wasser zugegeben. Unter Rühren wird weiterhin eine Mischung aus 7,2 g Phenoxypropanol (Filmbildehilfsmittel) und 7,2 g Benzin 180-210°C (Filmbildehilfsmittel) eingearbeitet.
Anschließend werden 85,0 g eines Hämatit-Pigmentes (Bayferrox^{®} 130 M, Fa. Lanxess), 82,1 g eines Korrosionsschutzpigmentes auf Basis Zink-Molybdänphosphat (Heucophos^{®} ZMP, basisches Zink-Molybdänorthophosphat-Hydrat, Fa. Heubach), 36,0 g Magnesiumsilikat (Füllstoff; Talkum 20 M 2, Fa. Luzenac) sowie 127,8 g eines Füllstoffes auf Basis Bariumsulfat und Zinksulfid (30 Gew. % ZnS) (Litopone^{®} L) zugegeben. Die gesamte Mischung wird für mindestens 30 Minuten mit Glasperlen (ø 3mm) dispergiert.
Daraufhin werden unter weiterem Rühren weitere 166,4 g Styrol-Acrylat-Dispersion, 1,9 g BYK^{®} 022 sowie 3,7 g einer 1:1-Mischung aus Wasser und einem handelsüblichen Korrosionsinhibitor (Korrosionsinhibitor L 1, Fa. Erbslöh) zugegeben und die Glasperlen abgesiebt.
Zum Abschluss wird der Ansatz mit einer Mischung aus 3,7 g einer 25 % igen Lösung eines handelsüblichen Verdickungsmittels auf Urethan-Basis (Collacral PU 85, Fa. BASF AG) und 13,2 g Butylglykol (Lösungsmittel) versetzt sowie gegebenenfalls der pH-Wert mit konz. Ammoniak auf ca. 9,5 nachgestellt. Man erhält 1000 g einer Korrosionsschutz-Grundierung mit 61% Feststoffgehalt und einer Pigment/Volumen-Konzentration (PVK) von 23%.

Zu 100 g des fertiges Lackes wurden 4,2 g einer 20 %-igen Lösung des Ammoniumsalzes der Di-2,4,4-trimethylpentyl-dithiophosphinsäure (entspricht 3 Gew. % feste Dithiophophinsäure bzgl. des festen Styrol-Acrylat-Polymers) gelöst in Butylglykol zugesetzt (Beispiel 8).

Zu Vergleichszwecken wurde eine weitere Probe des Lackes ohne Zusatz einer Dithiophosphinsäure belassen (Vergleichsbeispiel 4)

Applikation der Formulierungen auf Stahlbleche, Vorbereitung für den Salzsprühtest

Die zu prüfenden Grundierungen wurden mit vollentsalztem Wasser auf die gewünschte Viskosität (300 bis 1000 mPas (ICI Rotothinner Kugel)) verdünnt und auf ein gereinigtes unverzinktes Stahlblech (200 x 80 x 0,9 mm) mit einem Kastenrakel aufgezogen; die Spaltgröße wird dabei so gewählt, dass sich eine Trockenschichtdicke von 60-85 µm ergibt.

Nach sechstägiger Trocknung bei Raumtemperatur sowie einer eintägigen Temperung bei 50°C wurden die Rückseite des Prüfblechs zum Schutz vor Korrosion mit einem lösemittel-basierten Lack beschichtet sowie die Kanten mit Tesa-Film abgeklebt. Abschließend wurde das Prüfblech auf der mit der zu testenden Grundierung beschichteten Seite mit einem Ritzstachel bis auf das Substrat geritzt.

### Salzsprühtest / Auswertung

Mit den Testblechen wurde ein Salzsprühtest gemäß DIN EN ISO 7253 (Prüfdauer 240 h) durchgeführt.

Zur Bewertung des Korrosionsverhaltens wurde die Flächenkorrosion (Anteil der korrodierten Fläche nach dem Salzsprühtest im Verhältnis zur Gesamtfläche des Prüfbleches in [%]) herangezogen.

| | Beispiel 8 | Vergleichsbeispiel 4 |
|---|---|---|
| Flächenkorrosion | ca. 0 % | 90 % |

## Patentansprüche

1. Verfahren zum Aufbringen chromfreier Korrosionsschutzschichten auf metallische Oberflächen mindestens umfassend die Schritte
(1) Behandeln der metallischen Oberfläche mit einer mittels Strahlung vernetzbaren Zubereitung umfassend mindestens
(V) mindestens eine vernetzbare Komponente, welche mittels Strahlung vernetzbare Gruppen aufweist,
(V') optional mindestens einen Reaktivverdünner,
(C) ein Pigment und/oder Füllstoff,
(D) ein Korrosionsschutzmittel, sowie
(E) optional ein Lösemittel, und
(2) Vernetzen der aufgebrachten Schicht mittels Strahlung,
**dadurch gekennzeichnet, dass** es sich bei dem Korrosionsschutzmittel (D) um 0,25 bis 10 Gew. % mindestens einer Dithiophosphinsäure der allgemeinen Formel HS₂P(R¹)(R²) und/oder eines Salzes davon handelt, wobei es sich bei R¹ bzw. R² unabhängig voneinander um organische Reste mit 1 bis 30 C-Atomen handelt und es sich bei den strahlungshärtbaren Gruppen um ethylenisch ungesättigte Gruppen handelt.

2. Verfahren gemäß Anspruch 1, **dadurch gekennzeichnet, dass** es sich bei den strahlungshärtbaren Gruppen um (Meth)acrylatgruppen handelt.

3. Verfahren gemäß Anspruch 2, **dadurch gekennzeichnet, dass** es sich bei der vernetzenden Komponente um eine ausgewählt aus der Gruppe von multifunktionellen (Meth)acrylaten, Urethan(meth)acrylaten, Polyester(meth)acrylaten, Epoxy(meth)acrylaten, Carbonat(meth)acrylaten oder Polyether(meth)acrylaten handelt.

4. Verfahren gemäß Anspruch 3, **dadurch gekennzeichnet, dass** es sich bei der vernetzenden Komponente um Urethan(meth)acrylate handelt.

5. Verfahren gemäß Anspruch 4, **dadurch gekennzeichnet, dass** die Urethan(meth)acrylate eine mittlere (Meth)acrylatfunktionalität von 2 bis 10 aufweisen.

6. Verfahren gemäß Anspruch 4 oder 5, **dadurch gekennzeichnet, dass** die Urethan(meth)acrylate ein zahlenmittleres Molgewicht Mₙ von 500 g/mol bis 20000 g/mol aufweisen.

7. Verfahren gemäß einem der Ansprüche 1 bis 6, **dadurch gekennzeichnet, dass** es sich bei der metallischen Oberfläche um die Oberfläche von Eisen, Stahl, Zn, Zn-Legierungen, Al oder AI-Legierungen handelt.

8. Verfahren gemäß einer der Ansprüche 1 bis 7, **dadurch gekennzeichnet, dass** es sich bei der Metalloberfläche um die Oberfläche eines Bandmetalles handelt und man die Behandlung mittels eines kontinuierlichen Verfahrens vornimmt.

9. Verfahren zum Aufbringen chromfreier Korrosionsschutzschichten auf metallische Oberflächen mindestens umfassend die Schritte
(1) Behandeln der metallischen Oberfläche mit einer vernetzbaren Zubereitung umfassend mindestens
(A) ein polymeres Bindemittel,
(B) vernetzbare Komponente, wobei es sich dabei um vernetzbare Gruppen, die mit dem Bindemittel verbunden sind und/oder um mindestens einen zusätzlich eingesetzten Vernetzer handeln kann,
(C) ein Pigment und/oder Füllstoff,
(D) ein Korrosionsschutzmittel, sowie
(E) optional ein Lösemittel, und
(2) thermisches Vernetzen der aufgebrachten Schicht,
**dadurch gekennzeichnet, dass** es sich bei dem Korrosionsschutzmittel (D) um 0,25 bis 10 Gew. % mindestens einer Dithiophosphinsäure der allgemeinen Formel HS₂P(R¹)(R²) und/oder eines Salzes davon handelt, wobei es sich bei R¹ bzw. R² unabhängig voneinander um organische Reste mit 1 bis 30 C-Atomen handelt, und es sich bei dem Bindemittel (A) um eines ausgewählt aus der Gruppe von (Meth)acrylat(co)polymerisaten, partiell verseifte Polyvinylestern, Polyestern, Alkydharzen, Polylactonen, Polycarbonaten, Polyethern, Epoxidharz-Amin-Addukten, Polyharnstoffen, Polyamiden, Polyimiden oder Polyurethanen handelt.

10. Verfahren gemäß Anspruch 9, **dadurch gekennzeichnet, dass** es sich bei dem Bindemittel (A) um einen Polyester oder ein Epoxidharz-Amin-Addukte handelt.

11. Verfahren gemäß Anspruch 10, **dadurch gekennzeichnet, dass** man die thermische Vernetzung bei 100 bis 250°C vornimmt.

12. Verfahren gemäß einem der Ansprüche 1 bis 11, **dadurch gekennzeichnet, dass** man auf die Korrosionsschutzschicht noch weitere Lackschichten aufbringt.

## Claims

1. Process for applying chrome-free corrosion control layers to metallic surfaces, at least comprising the steps of
(1)treating the metallic surface with a radiation-crosslinkable formulation comprising at least
(V) at least one crosslinkable component containing radiation-crosslinkable groups,
(V') optionally at least one reactive diluent,
(C) a pigment and/or filler,
(D) a corrosion preventative, and
(E) optionally a solvent, and
(2) crosslinking the applied layer by means of radiation,
**characterized in that** the corrosion preventative (D) comprises 0.25% to 10% by weight of at least one dithiophosphinic acid of the general formula HS₂P (R¹) (R²) and/or a salt thereof, R¹ and R² independently of one another each being organic radicals having 1 to 30 C atoms and the radiation-curable groups comprising ethylenically unsaturated groups.

2. Process according to Claim 1, **characterized in that** the radiation-curable groups are (meth)acrylate groups.

3. Process according to Claim 2, **characterized in that** the crosslinking component is one selected from the group of polyfunctional (meth)acrylates, urethane (meth)acrylates, polyester (meth)acrylates, epoxy (meth)acrylates, carbonate (meth)acrylates or polyether (meth)acrylates.

4. Process according to Claim 3, **characterized in that** the crosslinking component comprises urethane (meth)acrylates.

5. Process according to Claim 4, **characterized in that** the urethane (meth)acrylates have a mean (meth)acrylate functionality of from 2 to 10.

6. Process according to Claim 4 or 5, **characterized in that** the urethane (meth)acrylates have a number-average molar mass Mₙ of from 500 g/mol to 20 000 g/mol.

7. Process according to any one of Claims 1 to 6, **characterized in that** the metallic surface is the surface of iron, steel, Zn, Zn alloys, Al or Al alloys.

8. Process according to any one of Claims 1 to 7, **characterized in that** the metal surface is the surface of a coil metal and treatment is carried out by means of a continuous process.

9. Process for applying chrome-free corrosion control layers to metallic surfaces, at least comprising the steps of
(1) treating the metallic surface with a crosslinkable formulation comprising at least
(A) a polymeric binder,
(B) crosslinkable components, which can be crosslinkable groups connected to the binder and/or can be at least one additionally employed crosslinker,
(C) a pigment and/or filler,
(D) a corrosion preventative, and
(E) optionally a solvent, and
(2) thermally crosslinking the applied layer,
**characterized in that** the corrosion preventative (D) comprises 0.25% to 10% by weight of at least one dithiophosphinic acid of the general formula HS₂P (R¹) (R²) and/or salt thereof, R¹ and R² independently of one another each being organic radicals having 1 to 30 C atoms, and the binder (A) is one selected from the group of (meth)acrylate (co)polymers, partially hydrolyzed polyvinyl esters, polyesters, alkyd resins, polylactones, polycarbonates, polyethers, epxoxy resin-amine adducts, polyureas, polyamides, polyimides or polyurethanes.

10. Process according to Claim 9, **characterized in that** the binder (A) is a polyester or an epoxy resin-amine adduct.

11. Process according to claim 10, **characterized in that** the thermal crosslinking is performed at 100 to 250°C.

12. Process according to any one of Claims 1 to 11, **characterized in that** further coating layers are applied to the corrosion control layer.

## Revendications

1. Procédé pour appliquer des couches, exemptes de chrome, de protection contre la corrosion sur des surfaces métalliques comprenant au moins les étapes consistant à
(1) traiter la surface métallique par une composition réticulable au moyen d'un rayonnement comprenant au moins
(V) un composant réticulable, qui présente des groupes réticulables au moyen d'un rayonnement,
(V') éventuellement au moins un diluant réactif,
(C) un pigment et/ou une charge,
(D) un agent de protection contre la corrosion ainsi que
(E) éventuellement un solvant et
(2) réticuler la couche appliquée au moyen d'un rayonnement,
**caractérisé en ce qu'**il s'agit, pour l'agent de protection contre la corrosion (D), de 0,25 à 10% en poids d'au moins un acide dithiophosphinique de formule générale HS₂P(R¹)(R²) et/ou d'un sel de celui-ci, dans laquelle il s'agit, pour R¹ ou R², indépendamment l'un de l'autre, de radicaux organiques comprenant 1 à 30 atomes de carbone et où il s'agit, pour les groupes durcissables par un rayonnement, de groupes éthyléniquement insaturés.

2. Procédé selon la revendication 1, **caractérisé en ce qu'**il s'agit, pour les groupes durcissables par un rayonnement, de groupes (méth)acrylate.

3. Procédé selon la revendication 2, **caractérisé en ce qu'**il s'agit, pour le composant réticulant, d'un composant choisi dans le groupe formé par les (méth)acrylates multifonctionnels, les uréthane-(méth)acrylates, les polyester(méth)acrylates, les époxy(méth)acrylates, les carbonate(méth)acrylates ou les polyéther(méth)acrylates.

4. Procédé selon la revendication 3, **caractérisé en ce qu'**il s'agit, pour le composant réticulant, d'uréthane(méth)acrylates.

5. Procédé selon la revendication 4, **caractérisé en ce que** les uréthane(méth)acrylates présentent une fonctionnalité (méth)acrylate moyenne de 2 à 10.

6. Procédé selon la revendication 4 ou 5, **caractérisé en ce que** les uréthane(méth)acrylates présentent un poids moléculaire numérique moyen Mₙ de 500 à 20.000 g/mole.

7. Procédé selon l'une quelconque des revendications 1 à 6, **caractérisé en ce qu'**il s'agit, pour la surface métallique, de la surface de fer, d'acier, de Zn, d'alliages de Zn, d'Al ou d'alliages d'Al.

8. Procédé selon l'une quelconque des revendications 1 à 7, **caractérisé en ce qu'**il s'agit, pour la surface métallique, de la surface d'un métal en bande et on réalise le traitement au moyen d'un traitement continu.

9. Procédé pour appliquer des couches, exemptes de chrome, de protection contre la corrosion sur des surfaces métalliques comprenant au moins les étapes consistant à
(1) traiter la surface métallique par une composition réticulable comprenant au moins
(A) un liant polymère
(B) un composant réticulable, où il peut s'agir de groupes réticulables qui sont liés au liant et/ou d'au moins un réticulant utilisé en plus
(C) un pigment et/ou une charge,
(D) un agent de protection contre la corrosion ainsi que
(E) éventuellement un solvant et
(2) réticuler thermiquement la couche appliquée, **caractérisé en ce qu'**il s'agit, pour l'agent de protection contre la corrosion (D), de 0,25 à 10% en poids d'au moins un acide dithiophosphinique de formule générale HS₂P(R¹)(R²) et/ou d'un sel de celui-ci, dans laquelle il s'agit, pour R¹ ou R², indépendamment l'un de l'autre, de radicaux organiques comprenant 1 à 30 atomes de carbone,
et où il s'agit, pour le liant (A), d'un liant choisi dans le groupe constitué par les (co)polymères de (méth)acrylate, les poly(esters de vinyle) partiellement saponifiés, les polyesters, les résines alkyde, les polylactones, les polycarbonates, les polyéthers, les produits d'addition de résine époxyde-amine, les polyurées, les polyamides, les polyimides ou les polyuréthanes.

10. Procédé selon la revendication 9, **caractérisé en ce qu'**il s'agit, pour le liant (A), d'un polyester ou d'un produit d'addition de résine époxyde-amine.

11. Procédé selon la revendication 10, **caractérisé en ce qu'**on réalise la réticulation thermique à 100 jusqu'à 250°C.

12. Procédé selon l'une quelconque des revendications 1 à 11, **caractérisé en ce qu'**on applique encore d'autres couches de laque sur la couche de protection contre la corrosion.
